(19) Europäisches Patentamt / European Patent Office / Office européen des brevets

(11) **EP 3 933 383 A1**

(12) **EUROPEAN PATENT APPLICATION**
published in accordance with Art. 153(4) EPC

(43) Date of publication:
**05.01.2022 Bulletin 2022/01**

(21) Application number: **19916743.8**

(22) Date of filing: **25.12.2019**

(51) Int Cl.:
*G01N 21/17* (2006.01)  *G06T 7/00* (2017.01)
*G06T 7/149* (2017.01)  *G06F 3/0484* (2013.01)

(86) International application number:
**PCT/JP2019/050836**

(87) International publication number:
**WO 2020/174862 (03.09.2020 Gazette 2020/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.02.2019 JP 2019035745**
**23.10.2019 JP 2019192713**

(71) Applicant: **Sony Group Corporation**
**Tokyo 108-0075 (JP)**

(72) Inventors:
• **WATANABE, Shinji**
**Tokyo 108-0075 (JP)**
• **AISAKA, Kazuki**
**Tokyo 108-0075 (JP)**
• **SOMA, Yoshio**
**Tokyo 108-0075 (JP)**

(74) Representative: **D Young & Co LLP**
**120 Holborn**
**London EC1N 2DY (GB)**

(54) **INFORMATION PROCESSING DEVICE, INFORMATION PROCESSING METHOD, AND INFORMATION PROCESSING SYSTEM**

(57)    There is provided an information processing device that includes a display control unit that controls display of image data in which a biological region is captured, an information acquisition unit that acquires first region information input with respect to the image data, and a processing unit that generates second region information on the basis of the image data, the first region information, and a fitting mode.

*FIG. 1*

EP 3 933 383 A1

**Description**

TECHNICAL FIELD

The present disclosure relates to an information processing device, an information processing method, and an information processing system.

BACKGROUND ART

In recent years, a technique for selecting a region (target region) used for a predetermined process in image data in which a biological region is captured has been known. In a case where the predetermined process is a learning process, information indicating a contour of the target region (region information of the target region) is used as teacher data for machine learning. For example, in a case where the target region is a lesion region, if the region information of the target region is used as teacher data for machine learning, artificial intelligence (AI) that automatically diagnoses from the image data can be constructed. Note that in the following, the region information of the target region used as the teacher data is also simply referred to as an "annotation". Various techniques are disclosed as techniques for obtaining annotations (see, for example, Non-Patent Document 1).

Here, it is desirable that accuracy of an annotation obtained as the teacher data is high. However, in general, in order to obtain the annotation, a user attempts to input the contour of a target region by drawing a curve on the image data using an input device (for example, a mouse or an electronic pen, or the like).

However, a deviation is likely to occur between the curve actually drawn by the user and the contour of the target region. Accordingly, if the user tries to draw a curve so as not to deviate from the contour of the target region, it takes a lot of effort for the user. On the other hand, when the user draws a rough curve, it takes a lot of effort to correct the curve to match the contour of the target region.

CITATION LIST

NON-PATENT DOCUMENT

Non-Patent Document 1: Jessica L. Baumann et al., "Annotation of Whole Slide Images Using Touchscreen Technology", Pathology Visions 2018

SUMMARY OF THE INVENTION

PROBLEMS TO BE SOLVED BY THE INVENTION

Accordingly, it is desired to provide a technique that allows selecting a target region with high accuracy while reducing the effort of the user on the image data in which a biological region is captured.

SOLUTIONS TO PROBLEMS

According to the present disclosure, there is provided an information processing device that includes a display control unit that controls display of image data in which a biological region is captured, an information acquisition unit that acquires first region information input with respect to the image data, and a processing unit that generates second region information on the basis of the image data, the first region information, and a fitting mode.

According to the present disclosure, there is provided an information processing method that includes controlling, by a processor, display of image data in which a biological region is captured, acquiring, by the processor, first region information input with respect to the image data, and generating, by the processor, second region information on the basis of the image data, the first region information, and a fitting mode.

According to the present disclosure, there is provided an information processing system having a reading device that generates, by reading a biological region, scan data including image data in which the biological region is captured, the information processing system including an information processing device that includes a display control unit that controls display of the image data, an information acquisition unit that acquires first region information input with respect to the image data, and a processing unit that generates second region information on the basis of the image data, the first region information, and the fitting mode.

According to the present disclosure, there is provided an information processing system including a medical image imaging device and software used for processing image data corresponding to an object imaged by the medical image imaging device, in which the software causes an information processing device to execute a process including

acquiring first region information input with respect to first image data corresponding to a first biological tissue, and generating second region information on the basis of the first image data, the first region information, and a fitting mode.

BRIEF DESCRIPTION OF DRAWINGS

Fig. 1 is a diagram illustrating a configuration example of an information processing system according to an embodiment of the present disclosure.

Fig. 2 is a diagram illustrating a functional configuration example of an information processing device according to the embodiment of the present disclosure.

Fig. 3 is a diagram illustrating an example of a case where the fitting is repeatedly executed while keeping a magnification of image data the same.

Fig. 4 is a diagram illustrating an example in which respective execution results of a plurality of times of fitting are simultaneously displayed in different display modes.

Fig. 5 is a diagram illustrating an example of a case where the fitting is repeatedly executed while changing the magnification of the image data.

Fig. 6 is a diagram illustrating an operation example of a case where the fitting is repeatedly executed while keeping the magnification of image data the same.

Fig. 7 is a diagram illustrating an operation example of a case where the fitting is repeatedly executed while changing the magnification of the image data.

Fig. 8 is a diagram illustrating an example of a tumor region.

Fig. 9 is a diagram illustrating an arrangement example of control points.

Fig. 10 is a diagram illustrating an arrangement example of control points.

Fig. 11 is a diagram for explaining an example of partial fitting.

Fig. 12 is a diagram illustrating an example of a checking UI for a fitting portion.

Fig. 13 is a diagram illustrating another example of the checking UI for the fitting portion.

Fig. 14 is a diagram for explaining an example in which a target region selected from the image data is used for analysis of an expression level of PD-L1 molecule.

Fig. 15 is a diagram for explaining an example of visualization of a search range.

Fig. 16 is a diagram for explaining an example of visualization of the search range.

Fig. 17 is a diagram for explaining an example of designating the search range.

Fig. 18 is a diagram for explaining an example of adjusting the search range.

Fig. 19 is a flowchart illustrating an example of information processing in a case where a user himself or herself adjusts the search range.

Fig. 20 is a flowchart illustrating an example of information processing in a case where the search range is changed according to a speed of boundary input.

Fig. 21 is a flowchart illustrating an example of information processing in a case where the search range is changed according to a pen pressure.

Fig. 22 is a flowchart illustrating an example of information processing in a case where the search range is changed according to an observation magnification.

Fig. 23 is a flowchart illustrating an example of information processing in a case where the search range is changed according to an image.

Fig. 24 is a diagram for explaining an example of a sample method when evaluating clearness of a boundary.

Fig. 25 is a block diagram illustrating a hardware configuration example of the information processing device according to the embodiment of the present disclosure.

MODE FOR CARRYING OUT THE INVENTION

Hereinafter, preferred embodiments of the present disclosure will be described in detail with reference to the accompanying drawings. Note that in the present description and drawings, components having substantially the same functional configurations are given the same reference signs, and duplicated descriptions are omitted.

Furthermore, in the description and drawings, a plurality of components having substantially the same or similar functional structures may be distinguished by adding different alphabets after the same reference signs. However, when it is not necessary to particularly distinguish each of a plurality of components having substantially the same or similar functional structures, only the same reference numerals are given. Furthermore, similar components of different embodiments may be distinguished by adding different alphabets after the same reference numerals. However, when it is not necessary to particularly distinguish each of similar components, only the same reference numerals are given.

Note that the description will be made in the following order.

0. Outline
1. Details of embodiment
1.1. Configuration example of information processing system
1.2. Functional configuration example of information processing device
1.3. Details of functions possessed by system
1.3.1. Types of target region
1.3.2. Types of fitting modes
1.3.3. Determination of boundary
1.3.4. Determination of initial region
1.3.5. Correction of initial region
1.3.6. Operation example
1.3.7. Arrangement of control points
1.3.8. Partial adsorption
1.3.9. Checking of fitting portion
1.3.10. Visualization of search range
1.3.11. Search range
1.3.12. Adjustment of search range
1.3.13. Boundary input speed
1.3.14. Pen pressure
1.3.15. Observation magnification
1.3.16. Image
1.3.17. Others
1.3.18. Plurality of processes
1.3.19. Fitting
2. Modification example
3. Hardware configuration example
4. Conclusion

<0. Outline>

In recent years, a technique for selecting a region (target region) used for a predetermined process in image data in which a biological region is captured has been known. In a case where the predetermined process is a learning process, information indicating a contour of the target region (region information of the target region) is used as teacher data for machine learning. For example, in a case where the target region is a lesion region, if the region information of the target region is used as teacher data for machine learning, artificial intelligence (AI) that automatically diagnoses from the image data can be constructed. Note that in the following, the region information of the target region used as the teacher data is also simply referred to as an "annotation". Various techniques are disclosed as techniques for obtaining annotations.

Here, it is desirable that accuracy of an annotation obtained as the teacher data is high. However, in general, in order to obtain the annotation, a user attempts to input the contour of a target region by drawing a curve on the image data using an input device (for example, a mouse or a pen tablet, or the like).

However, a deviation is likely to occur between the curve actually drawn by the user and the contour of the target region. Accordingly, if the user tries to draw a curve so as not to deviate from the contour of the target region, it takes a lot of effort for the user. On the other hand, when the user draws a rough curve, it takes a lot of effort to correct the curve to match the contour of the target region.

Accordingly, in the embodiment of the present disclosure, a technique will be mainly described that allows selecting a target region with high accuracy while reducing the effort of the user on image data in which a biological region is captured. More specifically, in the embodiment of the present disclosure, in a case where region information of the target region is used as teacher data for machine learning, a technique that allows obtaining highly accurate annotation while reducing the effort of the user will be mainly described.

Note that a label attached to the target region will also be used as teacher data for machine learning. The label may be information regarding the target region. The information regarding the target region may include a diagnostic result. The diagnostic result may include at least one of a cancer subtype, a stage of cancer, or a degree of differentiation of cancer cells. The degree of differentiation can be used to predict information such as what kind of drug (anticancer drug or the like) is likely to work. Alternatively, the information regarding the target region may include an analysis result. The analysis result may include at least one of presence or absence of a lesion in a target region, probability that the target region contains a lesion, the location of the lesion, or the type of the lesion.

In the following, the label and annotation used as teacher data are collectively referred to as "annotation data".

The outline of the embodiment of the present disclosure has been described above.

<1. Details of embodiment>

[1.1. Configuration example of information processing system]

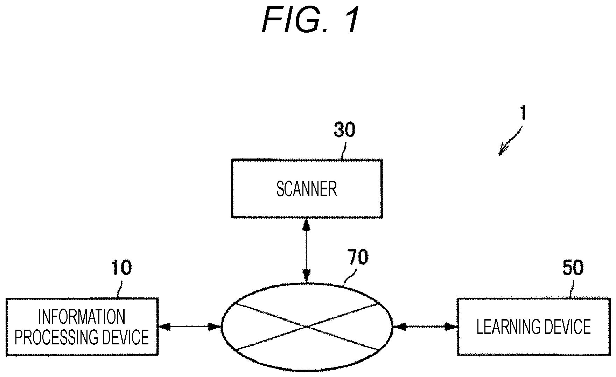

Subsequently, a configuration example of the information processing system according to the embodiment of the present disclosure will be described with reference to the drawings. Fig. 1 is a diagram illustrating a configuration example of the information processing system according to the embodiment of the present disclosure. As illustrated in Fig. 1, the information processing system 1 according to the embodiment of the present disclosure includes an information processing device 10, a scanner 30 (reading device), a network 70, and a learning device 50. The information processing device 10, the scanner 30, and the learning device 50 are capable of communicating with each other via the network 70.

The information processing device 10 includes, for example, a computer. For example, the information processing device 10 is used by a user (for example, a doctor or the like). In the embodiment of the present disclosure, it is mainly assumed a case where various operations by the user are directly input to the information processing device 10. However, various operations by the user may be input to the information processing device 10 via a terminal that is not illustrated. Furthermore, in the embodiment of the present disclosure, it is mainly assumed a case where various presented information for the user is directly output from the information processing device 10. However, the various presented information for the user may be output from the information processing device 10 via a terminal that is not illustrated.

The scanner 30 reads a biological region. Thus, the scanner 30 generates scan data including image data in which the biological region is captured. The biological region can correspond to a specimen obtained from a sample. For example, the scanner 30 has an image sensor and captures an image of a specimen with the image sensor, to thereby generate scan data including image data in which the specimen is captured. The reading method of the scanner 30 is not limited to a specific type. For example, the reading method of the scanner 30 may be a charge coupled device (CCD) type or a contact image sensor (CIS) type.

Here, the CCD type can correspond to a type in which reflected light from the specimen is reflected and concentrated on a mirror, light transmitted through a lens is read by the CCD sensor, and the light read by the CCD sensor is converted into image data. On the other hand, the CIS method can correspond to a type in which an RGB three-color light emitting diode (LED) is used as a light source, a result of reflection of light from the light source on the specimen is read by a photosensor, and the read result is converted into image data.

In the embodiment of the present disclosure, it is mainly assumed a case where image data (lesion image data) in which a lesion region is captured is used as the image data. However, the image data according to the embodiment of the present disclosure is not limited to the lesion image data. To digitize a lesion image, a method may be employed in which a plurality of images captured continuously of a specimen (slide) set on the stage of a scanner (digital microscope) is joined together to generate a single large image. This method is called whole slide imaging (WSI).

The learning device 50 includes, for example, a computer. The learning device 50 generates an identifier and data (model data) used by the identifier by performing machine learning using image data and annotation data (annotation and label). With such an identifier and model data, AI (for example, AI that automatically diagnoses) can be achieved. Deep learning can typically be used for machine learning.

Note that in the embodiment of the present disclosure, it is mainly assumed a case where the identifier is achieved by a neural network. In such cases, the model data may correspond to the weight of each neuron in the neural network. However, the identifier may be implemented by other than the neural network. For example, the identifier may be implemented by a random forest, by a support vector machine, or by AdaBoost.

Furthermore, in the embodiment of the present disclosure, it is mainly assumed a case where the information processing device 10, the scanner 30, and the learning device 50 exist as separate devices. However, a part or all of the information processing device 10, the scanner 30, and the learning device 50 may exist as one device. Alternatively, a part of functions possessed by the information processing device 10, the scanner 30, and the learning device 50 may be incorporated into another device.

In recent years, a technique for constructing an AI that automatically diagnoses from lesion image data is rapidly becoming widespread. For example, the lesion image data may be a large piece of image data obtained by the WSI method described above or a part of image data cut out from an image obtained by the WSI method.

Machine learning based on lesion image data and annotation data (annotation and label) is used to construct AI that automatically diagnoses from lesion image data. Construction of AI that automatically diagnoses can include "preparation of image data", "generation of annotation data", "processing of annotation data into learning data", "machine learning", and "evaluation of results". In the "processing of annotation data into learning data", the size of the annotation is adjusted, and a target region labeled with image data is masked to obtain a masked image. In the embodiment of the present disclosure, a main feature exists in the "generation of annotation data", and thus the "generation of annotation data" will be mainly described below.

The configuration example of the information processing system 1 according to the embodiment of the present disclosure has been described above.

[1.2. Functional configuration example of information processing device]

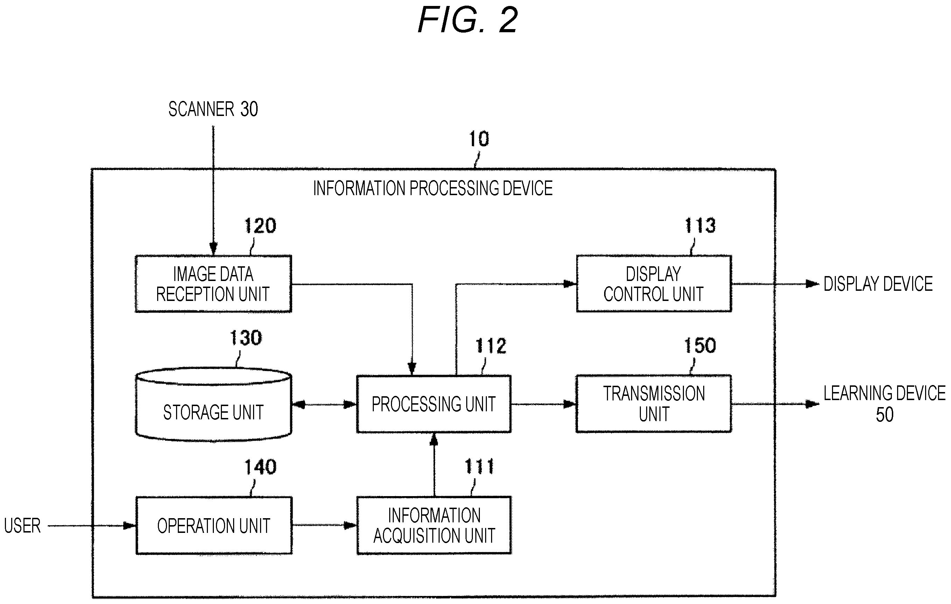

Next, a functional configuration example of the information processing device 10 according to the embodiment of the present disclosure will be described. Fig. 2 is a diagram illustrating a functional configuration example of the information processing device 10 according to the embodiment of the present disclosure. As illustrated in Fig. 2, the information processing device 10 includes an information acquisition unit 111, a processing unit 112, a display control unit 113, an image data reception unit 120, a storage unit 130, an operation unit 140, and a transmission unit 150.

The information acquisition unit 111, the processing unit 112, and the display control unit 113 may include, for example, a processing device such as one or a plurality of CPUs (Central Processing Units). Such a processing device may be configured by an electronic circuit. The information acquisition unit 111, the processing unit 112, and the display control unit 113 can be implemented by executing a program (software) by such a processing device.

The information acquisition unit 111 acquires various operations from the operation unit 140. The processing unit 112 generates annotation data on the basis of image data and various operations. The display control unit 113 is connected to a display device. Note that in the embodiment of the present disclosure, it is mainly assumed a case where the display device exists outside the information processing device 10. However, the display device may exist inside the information processing device 10. The display device may be achieved by a display, and the display may be a liquid crystal display, an organic electro-luminescence (EL) display, or another display.

The storage unit 130 is a recording medium that includes a memory, and stores a program executed by a processing device and stores data necessary for executing the program. Furthermore, the storage unit 130 temporarily stores data for calculation by the processing device. The storage unit 130 includes a magnetic storage unit device, a semiconductor storage device, an optical storage device, an optical magnetic storage device, or the like.

The operation unit 140 has a function of receiving an input of an operation by the user. In the embodiment of the present disclosure, it is mainly assumed a case where the operation unit 140 includes a mouse and a keyboard. However, the operation unit 140 is not limited to the case where the mouse and the keyboard are included. For example, the operation unit 140 may include an electronic pen, a touch panel, or an image sensor that detects a line of sight.

The image data reception unit 120 and the transmission unit 150 include a communication circuit. The image data reception unit 120 has a function of receiving image data from the scanner 30 via the network 70. The image data reception unit 120 outputs the received image data to the processing unit 112. On the other hand, the transmission unit 150 has a function of transmitting annotation data to the learning device 50 via the network 70 when the annotation data (annotation and label) is input from the processing unit 112.

The functional configuration example of the information processing device 10 according to the embodiment of the present disclosure has been described above.

[1.3. Details of functions possessed by system]

Next, details of the functions possessed by the information processing system 1 according to the embodiment of the present disclosure will be described.

(1.3.1. Types of target region)

Various types are assumed as the types of the target region according to the embodiment of the present disclosure. As an example of the target region, a tumor region is mainly assumed, for example. Other examples of the target region include a region having a sample, a tissue region, an artifact region, an epithelial tissue, a squamous epithelium, a glandular region, a cell atypical region, a tissue atypical region, or the like. That is, examples of a contour of the target region includes the boundary between a tumor region and a non-tumor region, the boundary between a region with a sample and a region without the sample, the boundary between a tissue (foreground) region and a blank (background) region, the boundary between an artifact region and a non-artifact, the boundary between an epithelial tissue and a non-epithelial tissue, the boundary between a squamous epithelium and a non-squamous epithelium, the boundary between a glandular region and a non-glandular region, the boundary between a cell atypical region and any other region, the boundary between a tissue atypical region and any other region, and the like.

(1.3.2. Types of fitting modes)

When the scanner 30 reads image data in which the biological region is captured, the image data reception unit 120 of the information processing device 10 receives the image data. The display control unit 113 controls the display device so that the image data is displayed by the display device. When the user gives an instruction of a shape with respect to the image data, the operation unit 140 receives the instruction of the shape by the user. The information acquisition unit 111 acquires first region information (information indicating the boundary) on the basis of the instruction of the shape by the user. Furthermore, the user may also input a fitting mode. When the user inputs the fitting mode, the operation unit 140 receives the fitting mode, and the information acquisition unit 111 acquires the fitting mode.

The processing unit 112 generates second region information (information indicating the contour of an initial region) on the basis of the image data, the first region information, and the fitting mode. Accordingly, it becomes possible to select the target region with high accuracy while reducing the effort of the user on the image data in which the biological region is captured. Here, it is mainly assumed a case where the fitting mode is input by the user. However, the fitting mode may be determined in any way. For example, the processing unit 112 may determine the fitting mode according to features of image data and generate the second region information on the basis of the determined fitting mode.

Here, the fitting mode is not limited. For example, examples of the fitting mode include "foreground background fitting mode", "cell membrane fitting mode", and "cell nucleus fitting mode".

The "foreground background fitting mode" may correspond to a fitting mode for the boundary between a foreground and a background. The "foreground background fitting mode" can be applied in a case where the target region is of the above-described type (a region having a sample, a tissue region, an artifact region, an epithelial tissue, a squamous epithelium, a glandular region, a cell atypical region, a tissue atypical region, or the like). In a case where the fitting mode is the "foreground background fitting mode", the processing unit 112 can perform fitting using a segmentation algorithm by graph cut on the basis of the image data and the first region information. Alternatively, machine learning may be used for the segmentation algorithm.

On the other hand, the "cell membrane fitting mode" can correspond to the fitting mode with respect to the cell membrane. In a case where the fitting mode is the "cell membrane fitting mode", the processing unit 112 recognizes features of the cell membrane from the image data, and performs fitting along the cell membrane on the basis of the recognized features of the cell membrane and the first region information. For example, upon fitting, edges dyed brown by membrane staining of immunostaining can be used.

Furthermore, the "cell nucleus fitting mode" may correspond to a fitting mode with respect to the cell nucleus. In a case where the fitting mode is the "cell nucleus fitting mode", the processing unit 112 recognizes features of the cell nucleus from the image data, and performs fitting along the cell nucleus on the basis of the recognized features of the cell nucleus and the first region information. For example, the nucleus is dyed blue if hematoxylin-eosin (HE) is used, and thus upon fitting, it is only required to use the staining information with hematoxylin-eosin (HE).

In the following, a case where the fitting mode is the "foreground background fitting mode" will be mainly described.

(1.3.3. Determination of boundary)

As described above, when the user gives an instruction of a shape with respect to the image data, the operation unit 140 receives the instruction of the shape by the user. The information acquisition unit 111 acquires the first region information (information indicating the boundary) on the basis of the instruction of the shape by the user. More specifically, the information acquisition unit 111 is only required to obtain first region information (information indicating the boundary) on the basis of a passing region or a peripheral region of the shape the instruction of which is given with respect to the image data.

The information acquisition unit 111 may obtain the first region information (information indicating the boundary) on the basis of the segmentation algorithm by the graph cut applied to a passing region or a peripheral region of the shape the instruction of which is given by the user with respect to the image data. For example, it is assumed a case where the user gives an instruction of a shape such as a curve or a rectangle with respect to the image data (for example, it is assumed a case where the user encloses a region with respect to the image data by a curve or a rectangle). In such a case, the information acquisition unit 111 may apply the segmentation algorithm by the graph cut to a region (peripheral region) surrounded by the shape to obtain the first region information (information indicating the boundary).

Alternatively, the information acquisition unit 111 may obtain the first region information (information indicating the boundary) on the basis of feature data extracted from the passing region or the peripheral region of the shape the instruction of which is given by the user with respect to the image data. For example, it is assumed a case where the user gives an instruction of a shape such as a line segment or a point with respect to the image data (for example, a case where the user specifies both ends or a point of the line segment with respect to the image data). In such a case, the information acquisition unit 111 may perform an extended scan of a region that matches or is similar to the feature data of the passing region or the peripheral region with reference to the passing region or the peripheral region, and obtain the first region information (information indicating the boundary).

Such first region information (information indicating the boundary) may be obtained by using machine learning. It is desirable that such machine learning is performed in advance. Furthermore, a feature vector or vector quantization may be used to extract the feature data in a case where an instruction of a line segment or a point is given. Furthermore, as a feature extraction algorithm for finding a region that matches or is similar to feature data of the passing region or the peripheral region, a method of matching the feature data using some kind of hash code may be used.

(1.3.4. Determination of initial region)

In a case where the first region information (information indicating the boundary) is obtained as described above, the processing unit 112 generates the second region information (information indicating the initial region) on the basis of the image data and the first region information (information indicating the boundary). For example, the processing unit 112 generates second region information (information indicating the initial region) by performing fitting on the basis of the image data and the first region information (information indicating the boundary). At this time, the display control unit 113 controls display of the second region information (information indicating the initial region).

In the fitting, the second region information (information indicating the initial region) may be determined so that likelihood (reliability) as the contour of the initial region becomes higher. The likelihood as the contour of the initial region may be obtained by using the graph cut using a random field that is set on the basis of the first region information (information indicating the boundary) as a cost function. However, in an algorithm such as the graph cut, in order to solve an energy minimization problem, it is mainly assumed here a case where low energy is used for the likelihood as the contour of the initial region.

Note that such a fitting method may be learned in advance by using machine learning. In the following, the case where the target region is a tumor region will be mainly described. However, the target region is not limited to the tumor region.

(1.3.5. Correction of initial region)

Even if the fitting is executed as described above and the second region information (information indicating the initial region) is obtained, it is assumed a case where the contour of the initial region is deviated from the contour of the tumor region. In such a case, the processing unit 112 may generate third region information on the basis of the image data and the second region information (information indicating the initial region). That is, the third region information may be generated by performing the fitting again on the basis of the image data and the second region information (information indicating the initial region). Alternatively, the processing unit 112 may generate the third region information on the basis of the image data, the second region information, and a movable range of the fitting. For example, the movable range of the fitting may be specified by the ratio [%] to the second region information and $\pm$ pixels. At this time, the display control unit 113 controls display of the third region information.

Thus, the contour of the third region may approach the contour of the tumor region. However, the contour of the third region does not always approach the contour of the tumor region, and the contour of the region after the fitting is executed may be separated from the contour of the tumor region due to repeated execution of the fitting. Therefore, it is desirable for the user to be able to select an appropriate number of repetitions while checking the contour of the region after the fitting is executed. The fitting may be repeatedly executed while keeping the magnification of the image data the same, or may be repeatedly executed while changing the magnification of the image data. In a case of changing the magnification of the image data, the processing unit 112 may determine the magnification of the image data on the basis of the fitting mode. Alternatively, the processing unit 112 may determine the resolution of the image data on the basis of the fitting mode.

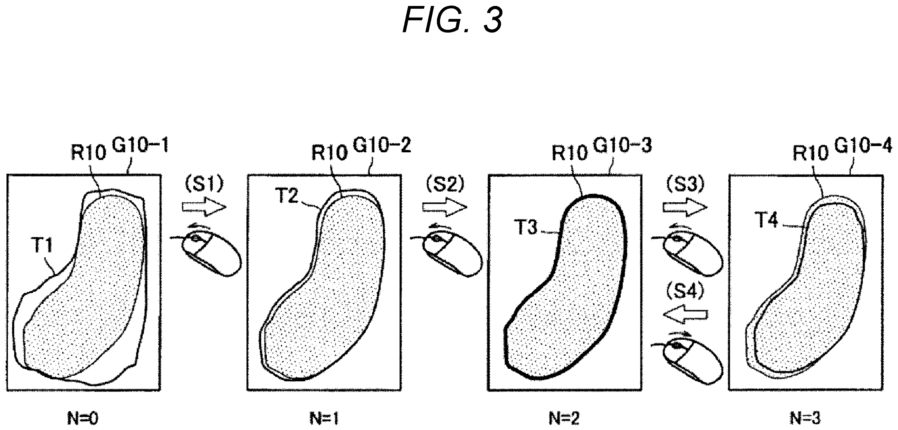

Fig. 3 is a diagram illustrating an example of a case where the fitting is repeatedly executed while keeping the magnification of the image data the same. A tumor region R10 is captured in each of pieces of image data G10-1 to G10-4, and the pieces of image data G10-1 to G10-4 are displayed at the same magnification. A curve T1 is the first region information (information indicating the boundary) obtained on the basis of an instruction of a shape by the user. A curve T2 is the second region information (information indicating the contour of the initial region) obtained by performing the fitting on the basis of the image data and the curve T1. A curve T3 is the third region information obtained by performing the fitting on the basis of the image data and the curve T2. A curve T4 is fourth region information obtained by performing the fitting on the basis of the image data and the curve T3.

The display control unit 113 can switch a display target between the curve T1 and the curve T2 on the basis of a switching operation. Furthermore, the display control unit 113 can switch the display target between the curve T2 and the curve T3 on the basis of the switching operation. Moreover, the display control unit 113 can switch the display target between the curve T3 and the curve T4 on the basis of the switching operation. The specific switching operation is not limited. For example, the switching operation may be an operation of pressing a button or a scrolling operation (for example, an operation of moving a mouse wheel back and forth, or the like).

In the example illustrated in Fig. 3, the display control unit 113 switches the display target from the curve T1 to the curve T2 after the fitting is executed in a case where an operation of moving the mouse wheel forward is performed (S1). Moreover, the display control unit 113 switches the display target from the curve T2 to the curve T3 after the fitting is executed in a case where an operation of moving the mouse wheel forward is performed (S2). Furthermore, the display control unit 113 switches the display target from the curve T3 to the curve T4 after the fitting is executed in a case where an operation of moving the mouse wheel forward is performed (S3).

When the fitting is performed, the curve before the fitting is executed needs to be retained. Then, the display control unit 113 can cause display again of the curve before the fitting is executed in a case where the switching operation is performed by the user. In the example illustrated in Fig. 3, the display control unit 113 switches the display target from the curve T4 to the curve T3 before the fitting is executed in a case where the operation of moving the mouse wheel forward is performed (S4).

In this manner, the user can select a curve close to the contour of the tumor region R10 (curve T3 in the example illustrated in Fig. 3) by switching the curve as the display target by the switching operation. The processing unit 112 can select any of the curves T2 to T4 as an annotation used in the learning process.

For example, in a case where the curve T3 is selected on the basis of a selection operation by the user, the processing unit 112 can select the curve T3 as an annotation used in the learning process. Alternatively, in a case where the curve T2 is selected on the basis of a selection operation by the user, the processing unit 112 can select the curve T2 as an annotation used in the learning process. Alternatively, in a case where the curve T4 is selected on the basis of a selection operation by the user, the processing unit 112 can select the curve T4 as an annotation used in the learning process.

Here, the specific selection operation is not limited, but the selection operation may be achieved by a button pressing operation, a mouse click operation, a seek bar moving operation, or the like. Alternatively, the processing unit 112 may be capable of automatically selecting a curve close to the contour of the tumor region R10 (curve T3 in the example illustrated in Fig. 3). Note that the repeated execution of the fitting does not necessarily have to be performed in a case where a switching operation is performed by the user. For example, the repeated execution of the fitting may be executed sequentially without a switching operation by the user as long as there are sufficient computational resources. Alternatively, a plurality of times of fitting may be performed at once and execution results may be displayed simultaneously in different display modes.

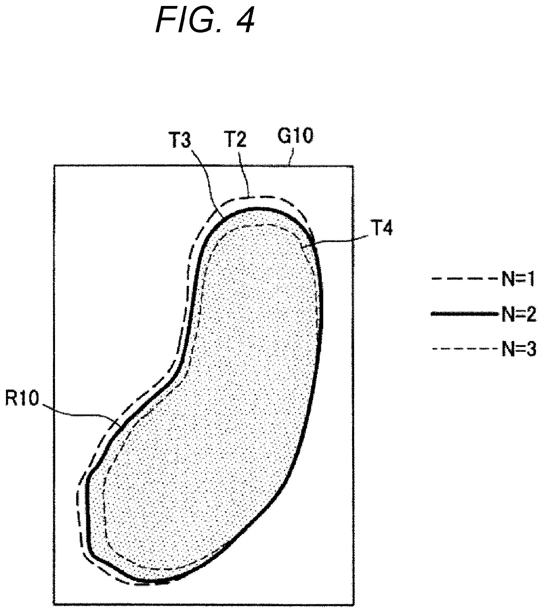

Fig. 4 is a diagram illustrating an example in which respective execution results of a plurality of times of fitting are simultaneously displayed in different display modes. Referring to Fig. 4, the tumor region R10 is captured in the image data G10. Furthermore, the display control unit 113 performs control so that the respective curves T2 to T4 are simultaneously displayed in different display modes. Note that the display control unit 113 may make the respective display modes for the curves T2 to T4 different in any manner. For example, the display control unit 113 may make the respective display modes of the curves T2 to T4 different depending on differences in color, thickness, and interval between dashed lines. The selection operation for any of the curves T2 to T4 can be achieved by a mouse click operation or the like.

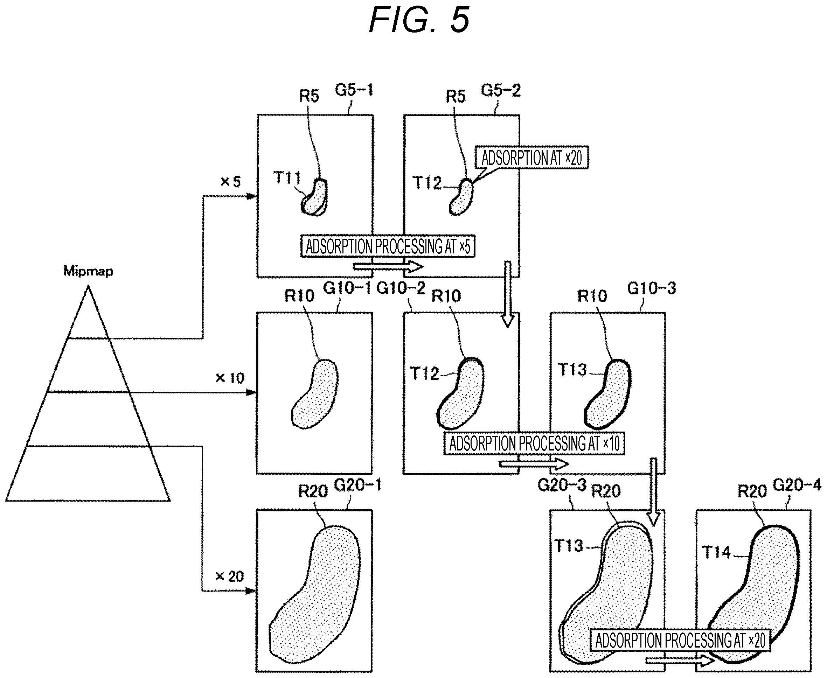

Fig. 5 is a diagram illustrating an example of a case where the fitting is repeatedly executed while changing the magnification of the image data. For example, in a case of diagnosing a tissue atypical region (colorectal cancer or the like), it is considered sufficient if a low-resolution annotation is obtained. On the other hand, in a case of diagnosing a region (texture) of cell atypia (for example, pancreatic ductal cancer, thyroid tumor, lymphoma, or the like), it is necessary to obtain a high-resolution annotation. High-resolution annotations can be obtained by using a hierarchical structure (at the magnification of image data display) called a mipmap.

Accordingly, the processing unit 112 needs to change the magnification of the image data after generating the second region information, and generate the third region information on the basis of the image data after the magnification is changed. More desirably, after generating the second region information, the processing unit 112 changes the magnification of the image data so that the magnification becomes high, and generates the third region information on the basis of the image data after the magnification is changed. At this time, the processing unit 112 is only required to select the third region information as the annotation used for the learning process. Thus, high resolution annotations can be obtained.

Referring to Fig. 5, a tumor region R5 is captured small in each of pieces of image data G5-1 and G5-2 at a magnification of five times, a tumor region R10 is captured in about a medium size in each of pieces of image data G10-1 to G10-3 at a magnification of 10 times, and a tumor region R20 is captured large in each of pieces of image data G20-1, G20-3, and G20-4 at a magnification of 20 times.

A curve T11 is the first region information (information indicating the boundary) obtained on the basis of an instruction of a shape by the user. A curve T12 is the second region information (information indicating the contour of the initial region) obtained by performing the fitting on the basis of the image data G5-1 at a magnification of five times and the curve T11. A curve T13 is the third region information obtained by performing the fitting on the basis of the image data G10-2 at a magnification of 10 times and the curve T12. A curve T14 is the fourth region information obtained by performing the fitting on the basis of the image data G20-3 at a magnification of 20 times and the curve T13. Note that, as in the image data G5-2, the magnification of the image data to which the fitting has been executed, such as "adsorption at ×20 times", may be displayed.

As illustrated in this example, the processing unit 112 just needs to repeatedly execute the fitting while largely changing the magnification of the image data stepwise by using a hierarchical structure called a mipmap. Consequently, the processing unit 112 can increase the fitting accuracy stepwise while allowing the user to draw a rough curve on the image data at a low-magnification, and thus can obtain the annotation with high accuracy and quickly. Note that as illustrated in Fig. 5, the magnification may be gradually increased, and the intermediate magnification may be skipped (for example, the fitting with the image data at a magnification of 10 times may be skipped, and after the fitting with the image data at a magnification of five times is executed, the fitting with the image data at a magnification of 20 times may be executed).

(1.3.6. Operation example)

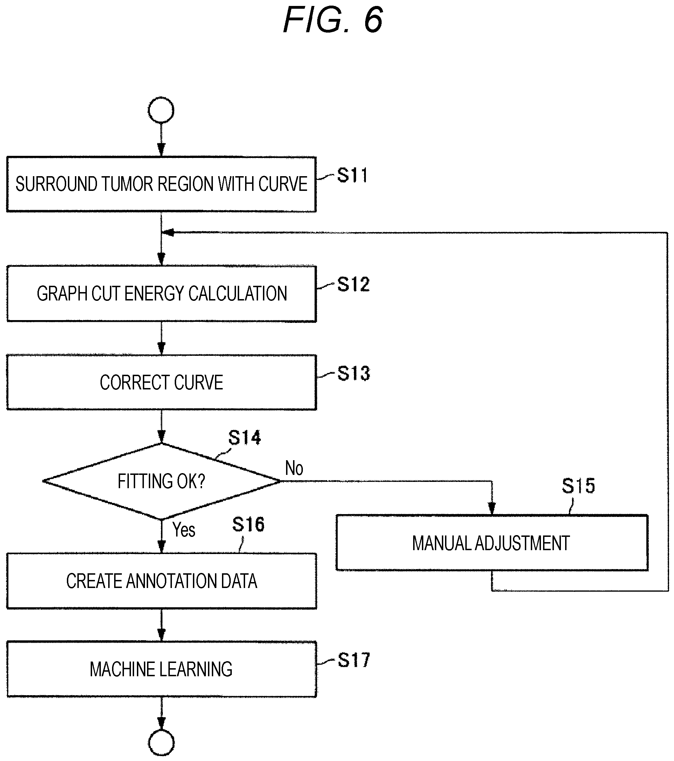

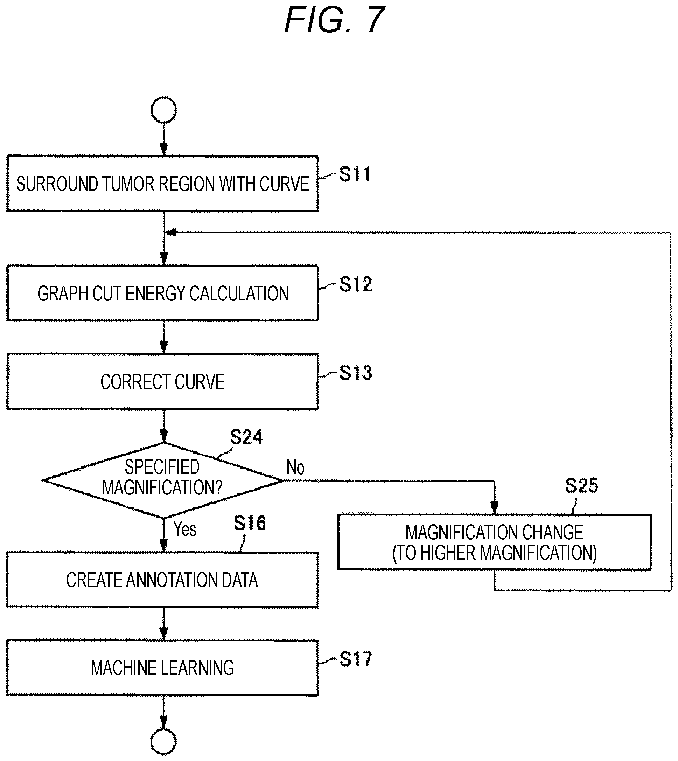

Next, an operation example of the information processing system 1 according to the embodiment of the present disclosure will be described with reference to Figs. 6 and 7.

Fig. 6 is a diagram illustrating an operation example of a case where the fitting is repeatedly executed while keeping the magnification of image data the same. First, the display control unit 113 controls display of the image data. Then, as illustrated in Fig. 6, the user surrounds the tumor region captured in the image data with a curve (S11) . The processing unit 112 performs energy calculation using the graph cut on the basis of the image data and the surrounding curve by the user (S12), and corrects the curve (performs the fitting) on the basis of the calculation result (S12).

The display control unit 113 controls display of the curve after correction. The user who sees the curve after correction determines whether or not the fitting is O.K. In a case where the user inputs that the fitting is N.G. ("No" in S14), the user executes a manual adjustment of the curve (S15), and the operation is shifted to S12. On the other hand, in a case where the user inputs that the fitting is O.K. ("Yes" in S14), the processing unit 112 generates annotation data (annotation and label) (S16). Thereafter, machine learning based on the annotation data is executed by the learning device 50 (S17), and an automatic diagnostic AI is constructed.

Fig. 7 is a diagram illustrating an operation example of a case where the fitting is repeatedly executed while changing the magnification of the image data. First, the display control unit 113 controls display of the image data. Then, as illustrated in Fig. 7, the user surrounds the tumor region captured in the image data with a curve (S11) . The processing unit 112 performs energy calculation using the graph cut on the basis of the image data and the surrounding curve by the user (S12), and corrects the curve (performs the fitting) on the basis of the calculation result (S12).

The display control unit 113 controls display of the curve after correction. The processing unit 112 determines whether or not the magnification of the current image data has reached the specified magnification. In a case where the magnification of the current image data has not reached the specified magnification ("No" in S24), the processing unit 112 changes the magnification of the image data to a higher magnification (S25), or on the other hand, in a case where the magnification of the current image data has reached the specified magnification ("Yes" in S24), the processing unit 112 generates annotation data (annotation and label) (S16). Thereafter, machine learning based on the annotation data is executed by the learning device 50 (S17), and an automatic diagnostic AI is constructed.

(1.3.7. Arrangement of control points)

In the foregoing, it is assumed a case where the manual adjustment is directly performed on the curve after the fitting is executed. However, the processing unit 112 determines positions of a plurality of points (control points) on a curve on the basis of the curve (second region information, third region information, or fourth region information) after the fitting is executed, the display control unit 113 may arrange a plurality of control points at the determined positions. Consequently, it is not necessary to manage all the information of a point set constituting the curve and it is only necessary to manage a plurality of points constituting the curve, and thus the amount of required memory can be reduced. For example, the processing unit 112 can reduce the number of control points for a portion of the curve after the fitting is executed that does not need to be expressed in detail.

As an example, by differentiating the curve after the fitting is executed, the processing unit 112 can reduce the number of control points as the absolute value of the differential value becomes smaller. For example, in a case where the AI needs fine textures such as a cell atypical region, it is better not to reduce the control points too much. On the other hand, in a case where the AI needs macro information such as a tissue atypical region, it is more effective to reduce the number of control points in terms of the amount of data.

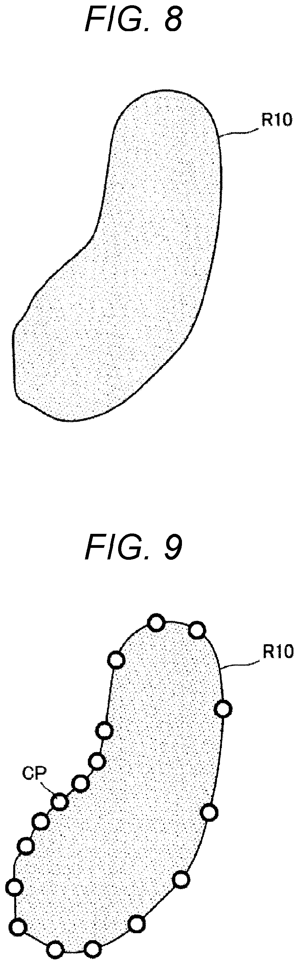

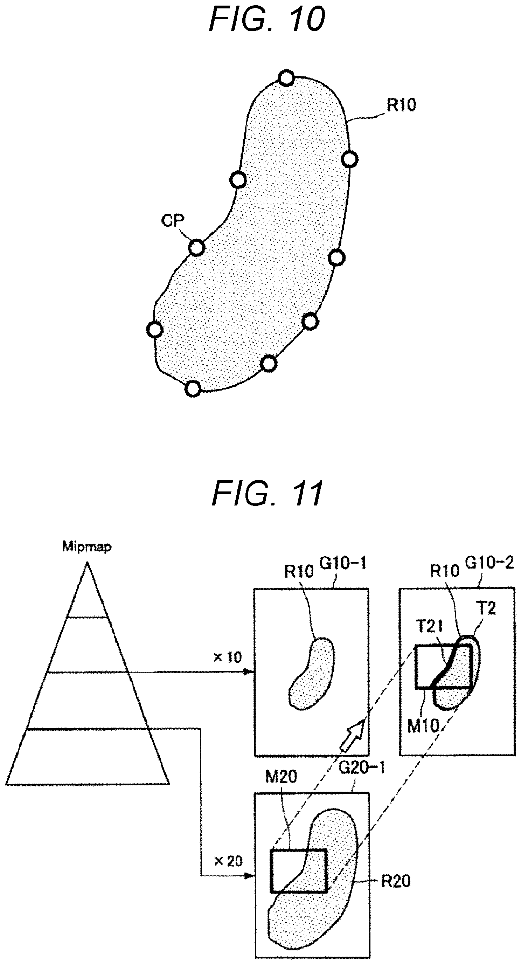

Fig. 8 is a diagram illustrating an example of the tumor region R10. Fig. 9 is a diagram illustrating an arrangement example of control points. With reference to Fig. 9, many control points CP are arranged in a portion where the change in an inclination of the curve is large. Fig. 10 is a diagram illustrating an arrangement example of control points. As illustrated in Fig. 10, the processing unit 112 can adjust the number of control points CP according to the type of the target region surrounded by the curve.

The user just needs to move a part or all of the plurality of control points CP in a case where the curve deviates from the tumor region R10 (for example, in a case where there is a portion where high-precision fitting is difficult, or the like). For example, the operation of moving the control points CP may be performed by dragging and dropping with the mouse. The processing unit 112 moves a part or all of the plurality of control points CP on the basis of the moving operation by the user. Then, the processing unit 112 is only required to execute fitting at least on the basis of the moved control points CP to correct the curve. Note that lines among the plurality of control points may be interpolated by Bezier or splines.

(1.3.8. Partial adsorption)

In the foregoing, it is mainly assumed a case where the entire curve is fitted to the tumor region. However, only a part of the curve may be partially fitted. Fig. 11 is a diagram for explaining an example of partial fitting. Referring to Fig. 11, a partial region M20 in image data G20-1 at a magnification of 20 times is displayed as a magnifying glass region M10 in the image data G10-2 having a magnification of 10 times.

The user can move a curve T21 or control points arranged on the curve T21 of the magnifying glass region M10. The processing unit 112 may execute fitting (partial fitting) of only a moved portion on the basis of such moving operation by the user. For example, in a case where a part of the plurality of the control points arranged on the curve (second region information) is moved on the basis of the moving operation, the processing unit 112 is only required to generate a curve (third region information) on the basis of the moved control points.

(1.3.9. Checking of fitting portion)

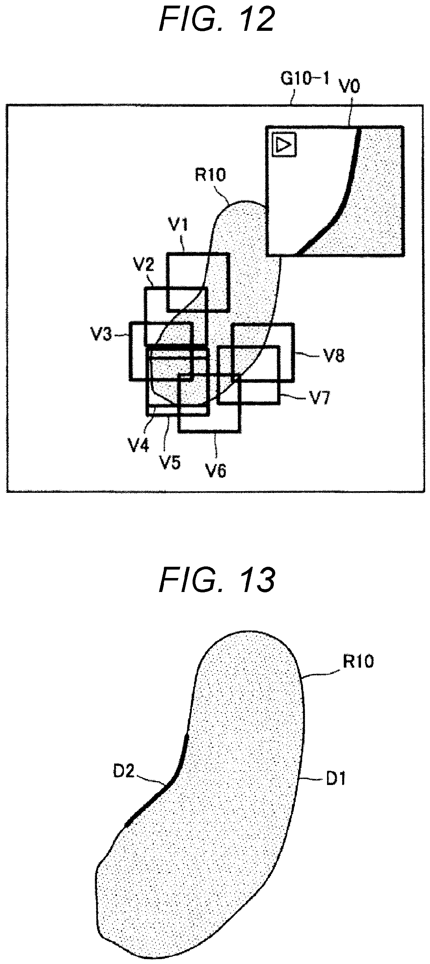

Various user interfaces (UIs) are assumed as a UI for checking the status of the fitting executed as described above. Fig. 12 is a diagram illustrating an example of a checking UI for the fitting portion. With reference to Fig. 12, the image data G10-1 is displayed. An enlarged region (enlarged region V0) of a part of the image data G10-1 is also displayed. For example, the display control unit 113 may scan regions V1 to V8 in this order along the curve and causes display of the scanned region as the enlarged region V0, so that the user can check the fitting status.

Alternatively, the processing unit 112 may calculate likelihood (reliability) of a curve (second region information or third region information) on the basis of the curve (second region information or third region information). Then, in a case where the display control unit 113 detects a section in which the likelihood is lower than a predetermined likelihood, display of predetermined information according to the section may be controlled. Fig. 13 is a diagram illustrating another example of the checking UI for the fitting portion. With reference to Fig. 13, in the curve, a section D2 whose likelihood is lower than the predetermined likelihood is displayed in a different display mode from that of a section D1 whose likelihood is higher than the predetermined likelihood.

Note that the display control unit 113 may make the display mode between the section D1 and the section D2 different in any way. For example, the display control unit 113 may make the display modes of the section D1 and the section D2 different depending on differences in color, thickness, and interval between dashed lines.

(1.3.10. Visualization of search range)

In the embodiment described above, the user cannot predict how the fitting will be performed. Therefore, there is a possibility that the fitting is performed to a region not intended for the user. In the following embodiments, fitting that can improve usability will be described.

The above-mentioned fitting is performed by searching the region from a line drawn by the user to a predetermined distance. Here, the range of the fitting described above may be visualized. Hereinafter, the region searched during the fitting process will be referred to as a "search range". The display search unit 113 displays the search range of the fitting on image data. This allows the user to intuitively understand that a result is output within an indicated width range.

The display control unit 113 visualizes the search range by one of the following two methods. Specifically, the display control unit 113 may cause display of a search range manually determined by the user, or may cause display of a search range automatically determined by the information processing device 10. Hereinafter, a case where the display control unit 113 causes display of the search range that is manually determined by the user will be described.

By the user selecting information indicating a width of the search range (for example, a pen or a marker), the display control unit 113 causes display of the search range having a width corresponding to selected information. For example, the display control unit 113 causes display of a wider search range as the width of the selected information is wider. To give a specific example, in a case where the user selects one cm as the width of the search range, the display control unit 113 causes display of the search range having a width of one cm. For example, in a case where the user selects a search range indicating a circle having a diameter of one cm, the display control unit 113 causes display of a search range indicating a circle having a diameter of one cm. Note that the width of a boundary input by the user is not limited to a circle, a line, or an ellipse, and may be specified by any geometric shape. For example, in a case where the width of the boundary is a circle, the user inputs a boundary with a circle having a diameter corresponding to the search range. In this manner, the display control unit 113 may cause display of the search range of the fitting corresponding to the width of the boundary input by the user.

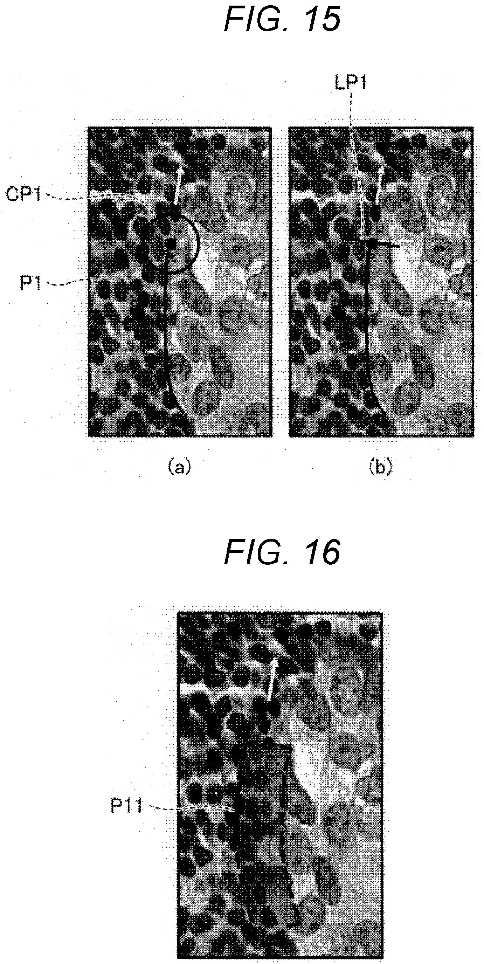

Hereinafter, visualization of the search range by two methods will be described with reference to Fig. 15. Fig. 15 illustrates a pathological image. An object P1 in Fig. 15 illustrates a cell. Note that an aggregate of cells is called a tissue. Fig. 15 illustrates an example of visualization of the search range. Fig. 15(a) illustrates the search range from the boundary entered by the circle. Specifically, Fig. 15(a) illustrates a case where a circle indicating a search range is displayed following a point drawn by the user. In this case, the fitting is performed in any of regions of the circle indicating the search range displayed in a following manner. Furthermore, the display control unit 113 determines the size of the following circle according to selection by the user in a case of causing display of the search range having a width according to information selected by the user. For example, in a case where the user selects a circle having a diameter of one cm, the display control unit 113 causes display of the circle with a diameter of one cm as the search range following points drawn by the user. Fig. 15(b) illustrates a search range from a boundary entered by a line segment. Specifically, Fig. 15(b) illustrates a case where a line indicating the search range following points drawn by the user is displayed in a following manner. In this case, fitting is performed by any of lines indicating the search range displayed in a following manner. Furthermore, the display control unit 113 determines the thickness and length of a following line according to the selection by the user in a case of displaying the search range having a width according to information selected by the user. For example, in a case where the user selects a line having a length of one cm, the display control unit 113 causes display of the line having a length of one cm as a search range following points drawn by the user.

The display control unit 113 may cause display of the search range at any timing during or after the input by the user.

The display control unit 113 may cause display of the region indicating the search range in any mode. For example, the display control unit 113 may cause display of the region indicating the search range with varying transmittance. In Fig. 16, the range P11 on the image data indicates the search range. Fig. 16 may illustrate a locus of the search range that is displayed following the input by the user, or may illustrate a locus of the search range by the width according to information selected by the user. Consequently, by making the region indicating the search range transmissible, it is possible to refer to a tissue within the range while indicating the range. For example, the display control unit 113 may cause display with higher transmittance toward the center of the boundary. In this case, the display is performed with at least two or more transmittances. That is, the display control unit 113 may cause display of the region indicating the display range with at least two or more transmittances. For example, the display control unit 113 may cause display of the region indicating the search range in varying colors. For example, the display control unit 113 may cause display of a region indicating a search range with a lighter shade of color toward the center of the boundary. In this case, it will be displayed in at least two or more colors. That is, the display control unit 113 may cause display of the region indicating the display range in at least two or more colors. For example, the display control unit 113 may cause display of the region indicating the search range by filling the region with a geometric pattern such as diagonal lines or dots. Furthermore, in the region indicating the search range, the display control unit 113 may cause display with lowered transmittance, increased gradations of colors, or increased density of geometric patterns such as diagonal lines and dots, as the probability of fitting increases. For example, in a case where the processing unit 112 increases the probability of fitting as the distance from a line segment is closer to the center, the display control unit 113 may display the search range by increasing the gradations as the distance from the line segment is closer to the center. In this manner, the display control unit 113 may cause display of the search range of the fitting according to any one of the transmittance, the color, the geometric shape, or the geometric pattern predetermined by the user.

In this manner, the display control unit 113 may control display of the search range by the method described above.

(1.3.11. Search range)

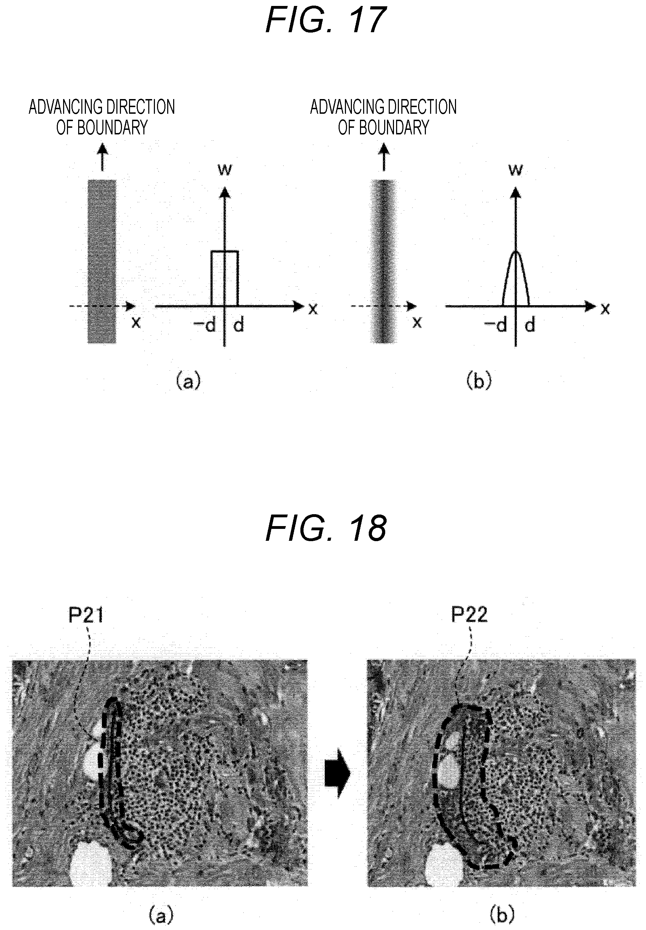

The processing unit 112 searches for a fitting within the range of a region from a line drawn by the user to a predetermined distance. Fig. 17 illustrates an example of the search range in a case where the search range is up to a region separated by a distance d. The search range may be a binary of 0 and 1, as illustrated in Fig. 17(a). In this case, the processing unit 112 may apply an algorithm having a search range up to a region separated by a distance d in the direction of a normal line with respect to the direction of a boundary input by the user. Furthermore, the search range is not limited to the binary one, and may change by weight. For example, for the search range, as illustrated in Fig. 17(b), an algorithm based on weights according to the distance from a line segment may be applied.

(1.3.12. Adjustment of search range)

The processing unit 112 may allow the user to manually adjust (set) the search range. Hereinafter, the adjustment of the search range may be appropriately assumed as setting of the search range. For example, the processing unit 112 may allow the user to manually select the shape and width of the search range. For example, the processing unit 112 may allow the user to manually select the shape of the search range and may automatically change the width of the search range according to the input of the user. Note that the adjustment of the search range may be an increase or a decrease in the width of the search range. Fig. 18 illustrates two search ranges with different widths selected by the user. Fig. 18(a) illustrates a case where the processing unit 112 searches for fitting within a range P21. Fig. 18(b) illustrates a case where the processing unit 112 searches for fitting within a range P22. Furthermore, the processing unit 112 may allow adjusting the search range at any timing. For example, the processing unit 112 may be capable of automatically adjusting the search range at any timing before, during, or after the input of a boundary.

Here, an example of a case of allowing the user to perform the adjustment manually through the interface will be described. For example, the processing unit 112 may allow adjusting the search range by using a GUI (for example, a slider, a combo box, or a button) on the operation screen. For example, the processing unit 112 may allow adjusting the search range by hardware such as a mouse wheel. For example, the processing unit 112 may allow adjusting the search range by selecting a predefined preset. In this case, the processing unit 112 may determine the width of the search range by selection of information indicating the width of the search range by the user.

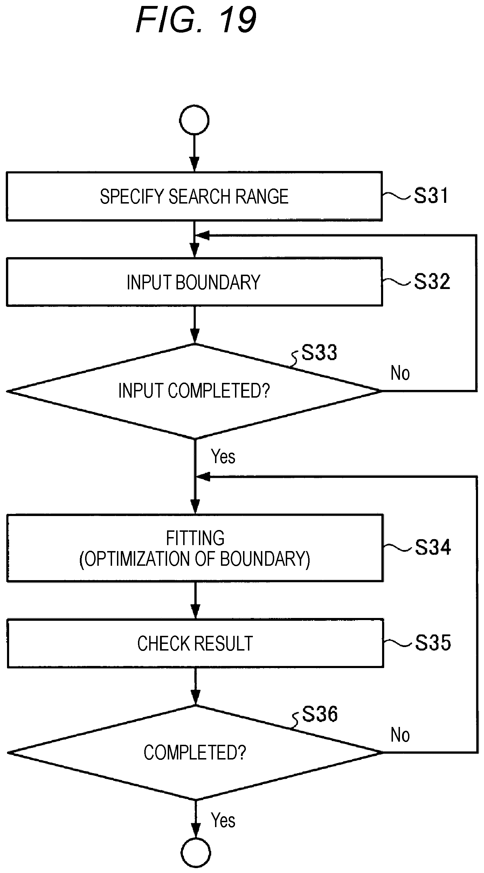

An example in which the user himself or herself adjusts the search range will be described. Fig. 19 illustrates a flow of information processing in a case where the user himself or herself adjusts the search range.

The information processing device 10 receives a specification of the search range before the input of a boundary (S31). The information processing device 10 receives the input of the boundary with a pen having a thickness corresponding to the search range (S32). Note that the information processing device 10 may receive adjustment of the search range with a GUI or the like by the user during the input of the boundary. The information processing device 10 determines whether or not the input of the boundary has been completed (S33). In a case where the input of the boundary has not been completed ("No" in S33), the information processing device 10 newly receives the input of a boundary. The information processing device 10 executes fitting in a case where the input of the boundary has been completed (S34). The information processing device 10 displays a result of the fitting (S35). The information processing device 10 determines whether or not a change in the search range has been received (S36). In a case where the change in the search range has been received ("Yes" in S36), the information processing device 10 executes the fitting again. In a case where the adjustment of the search range has not been received ("No" in S36), the information processing device 10 ends the information processing. In this manner, in a case where the user checks the result of the fitting and the expected result is not obtained, adjustment of the search range can be received and the fitting can be repeatedly executed until the user obtains an expected effect.

Although the example in which the processing unit 112 allows manually adjusting the search range by the user has been described above, the processing unit 112 may automatically adjust the search range on the basis of conditions when operating and a target image. Hereinafter, a case where the display control unit 113 causes display of the search range automatically determined by the information processing device 10 will be described. When the user inputs (draws) a boundary on the image data, the display control unit 113 causes display of the search range of fitting according to the input by the user. In this manner, the display control unit 113 may cause display of the search range of fitting according to input information for the image data by the user. Note that the processing unit 112 may adjust the search range at any timing, as in the case where the user manually adjusts the search range. For example, the processing unit 112 may adjust the search range at any timing before, during, or after the input of the boundary.

In this case, the display control unit 113 may cause display of the search range with enlargement or reduction on the basis of a specified shape by the user specifying the shape of the search range in advance. Furthermore, the display control unit 113 may cause display of the search range based on a shape automatically determined by the information processing device 10.

Here, an example will be given of a case where it is automatically performed on the basis of conditions when operating and the target image. For example, the processing unit 112 may adjust the search range on the basis of the speed of a boundary input by the user. Note that the speed of the boundary input by the user is an input speed of the boundary by the user. For example, the processing unit 112 may adjust the search range on the basis of the pen pressure with which the user inputs the boundary. For example, the processing unit 112 may adjust the search range on the basis of the magnification of the image data when the user inputs the boundary. For example, the processing unit 112 may adjust the search range on the basis of features near the boundary input by the user. Note that in a case where the boundary input by the user is a closed curve, the processing unit 112 may adjust the search range on the basis of features inside and outside the boundary input by the user. Note that as long as the inside and outside of the boundary input by the user can be distinguished, it is not limited to the closed curve, and whatever the curve is, the processing unit 112 may adjust the search range on the basis of the features inside and outside the boundary input by the user. Hereinafter, an example of automatically changing the search range will be described individually.

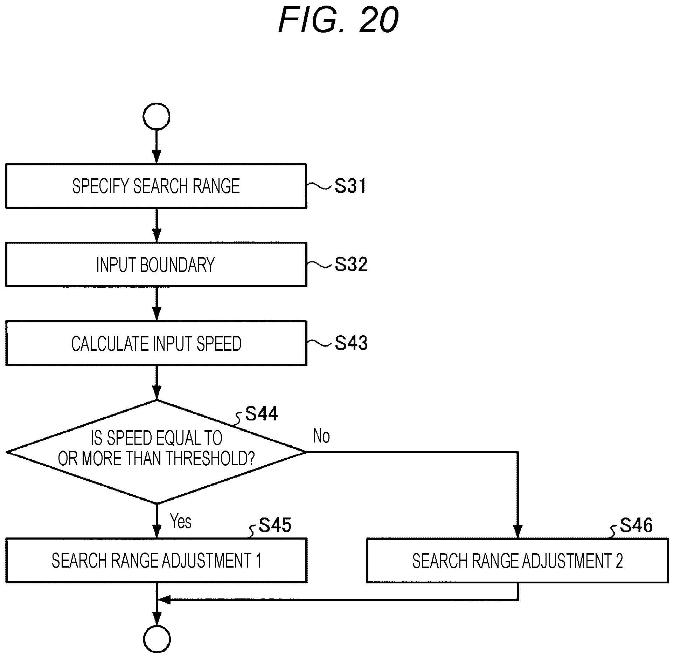

In Fig. 19, an example in which the user himself or herself adjusts the search range has been described. An example of automatically changing the search range will be described below. Specifically, examples in which the information processing device 10 changes the search range according to the speed, pen pressure, magnification, and image will be described with reference to Figs. 20 to 23.

In this case, the information processing device 10 determines the width of the search range according to input of a boundary by the user. Specifically, the processing unit 112 may change the size of the following search range according to the input by the user. For example, the processing unit 112 may change the size of the following search range according to the speed of input by the user and the pen pressure. For example, the processing unit 112 may make a change so that the faster the input speed by the user, the larger the size of the search range. For example, in a case where the user selects a circle as the search range in advance, the processing unit 112 may change the size (for example, diameter) of a following circle according to the input by the user, or in a case where the user selects a line as the search range in advance, it may change the size (for example, thickness and length) of a following line according to the input by the user. Note that the shape of the search range is not limited to the above-described example, and may be any geometric shape.

The processing unit 112 may execute the process of fitting in the search range adjusted on the basis of a predetermined condition. Specifically, the processing unit 112 may execute the process of fitting in the search range adjusted according to the operation on the image data by the user.

(1.3.13. Boundary input speed)

It is conceivable that how carefully the user inputs a highly reliable boundary is correlated with the input speed of the user. For example, when the input speed is fast, it is presumed that a rough, unreliable boundary is being input, while when the input speed is slow, it is presumed that a highly reliable boundary is being carefully input. Fig. 20 illustrates a flow of information processing in a case where the search range is adjusted according to the speed of boundary input on the basis of the above-described assumptions.

The information processing device 10 receives a specification of the search range before the input of a boundary (S31). The information processing device 10 receives an input of a boundary with a pen having a thickness corresponding to the search range (S32). The information processing device 10 calculates the input speed of the received boundary (S43). For example, the information processing device 10 calculates the input speed on the basis of movement of the distance between two points on the image data and the time required for the movement. The information processing device 10 determines whether or not the calculated input speed is equal to or higher than a predetermined threshold (S44). In a case where the calculated input speed is equal to or higher than a predetermined threshold ("Yes" in S44), the information processing device 10 adjusts the search range to a wide value range (S45). On the other hand, in a case where the calculated input speed is below a predetermined threshold ("No" in S44), the information processing device 10 adjusts the search range to a narrow value range (S46).

In this case, the processing unit 112 executes the process of fitting with the search range adjusted according to the speed of the boundary input by the user.

(1.3.14. Pen pressure)

A case where the search range is changed on the basis of a pen pressure detected by a device will be described. For example, a case will be described where the search range is changed on the basis of a pen pressure detected by a device in a case where the annotation is performed using a device such as a pen tablet.

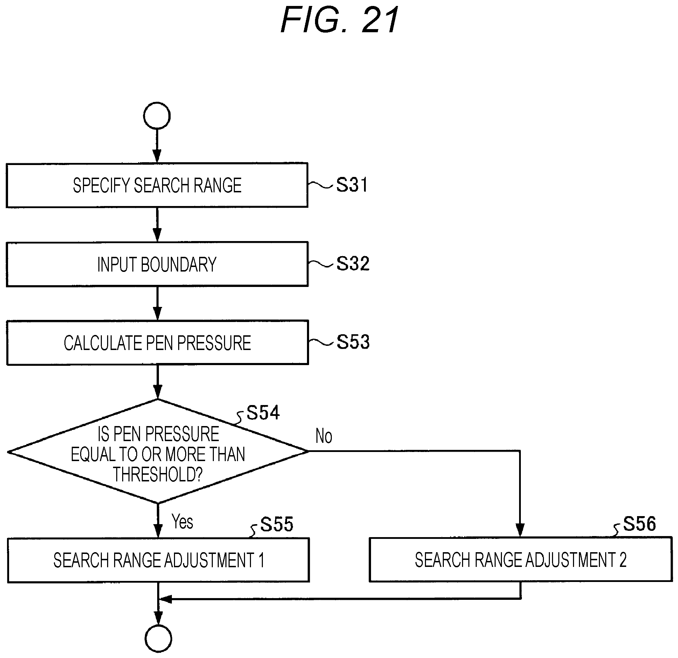

It is conceivable that how carefully the user inputs a highly reliable boundary is correlated with the pen pressure. For example, when the pen pressure is small, it is presumed that a rough, unreliable boundary is being input, while when the pen pressure is large, it is presumed that a highly reliable boundary is being carefully input. Fig. 21 illustrates a flow of information processing in a case where the search range is adjusted according to the pen pressure of boundary input on the basis of the above-described assumptions.

The information processing device 10 receives a specification of the search range before the input of a boundary (S31). The information processing device 10 receives an input of a boundary with a pen having a thickness corresponding to the search range (S32). The information processing device 10 calculates the pen pressure of the received boundary input (S53). Specifically, the information processing device 10 calculates the pen pressure detected when the user inputs a boundary. For example, the information processing device 10 calculates the pen pressure by detecting a pressure applied within a predetermined range from a spot input by the user on the image data. The information processing device 10 determines whether or not the calculated pen pressure is equal to or higher than a predetermined threshold (S54).

In a case where the calculated pen pressure is equal to or higher than a predetermined threshold ("Yes" in S54), the information processing device 10 adjusts the search range to a narrow value range (S55). On the other hand, in a case where the calculated pen pressure is below a predetermined threshold ("NO" in S54), the information processing device 10 adjusts the search range to a wide value range (S56) .

(1.3.15. Observation magnification)

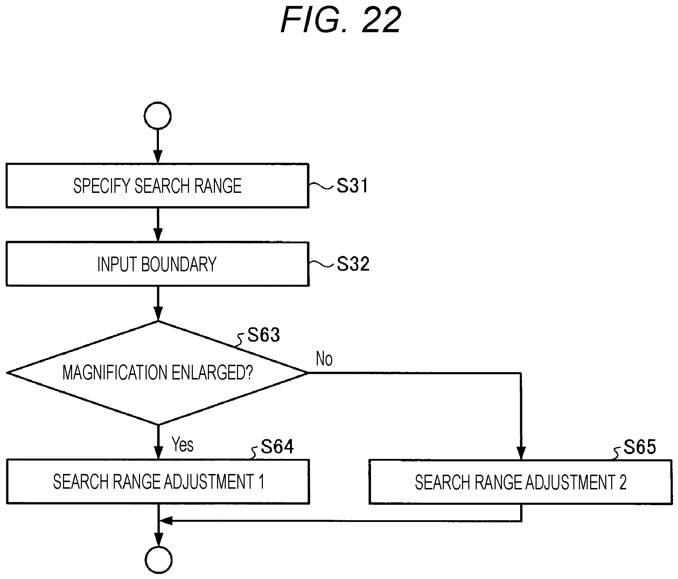

It is conceivable that how carefully the user inputs a highly reliable boundary is correlated with the observation magnification of the user. For example, when the user is observing at a large magnification (enlargement), it is presumed that a highly reliable boundary is carefully input, while when the user is observing at a small magnification (wide angle), it is presumed that an unreliable boundary is roughly input. Fig. 22 illustrates a flow of information processing in a case where the search range is adjusted according to the observation magnification on the basis of the above-described assumptions.

The information processing device 10 receives a specification of the search range before the input of a boundary (S31). The information processing device 10 receives an input of a boundary with a pen having a thickness corresponding to the search range (S32). In a case where the observation magnification is changed, the information processing device 10 determines whether the observation magnification is enlarged or reduced (S63). For example, the information processing device 10 determines whether the observation magnification is increased or reduced while performing the annotation. In a case where the observation magnification is increased ("Yes" in S63), the information processing device 10 adjusts the search range to a narrow value range (S64). On the other hand, in a case where the observation magnification is reduced ("No" in S63), the information processing device 10 adjusts the search range to a wide value range (S65).

In this case, the processing unit 112 executes the process of fitting in the search range adjusted according to the magnification of the image data when the user inputs the boundary.

(1.3.16. Image)

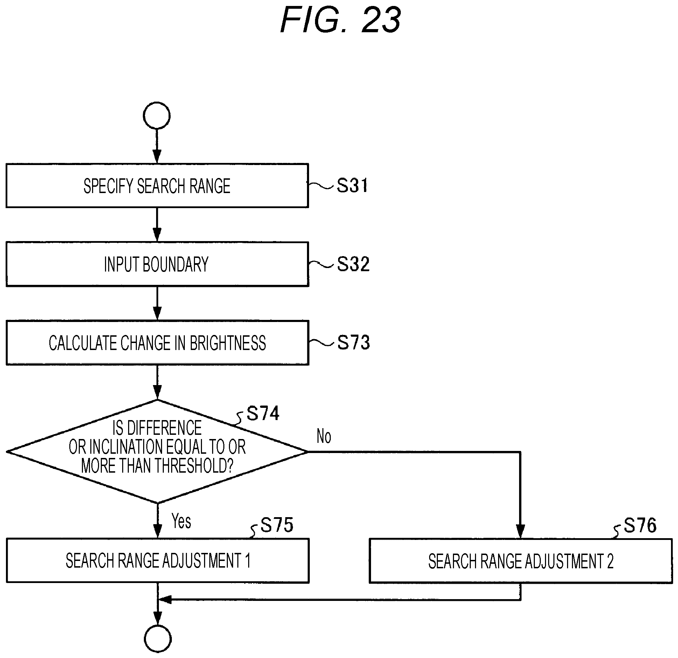

It is conceivable that the appropriate search range also depends on the target image. For example, in a case where the boundary on the image data is unclear, it is presumed that a more appropriate fitting effect can be obtained by adjusting the search range widely. Specifically, the information processing device 10 can adjust the search range on the basis of an analysis result by analyzing the entire target image or the image near the boundary in advance, and thus it is presumed that a more appropriate fitting effect can be obtained. Fig. 23 illustrates a flow of information processing in a case where unclearness of the boundary is evaluated from a change in brightness (luminance value) around the boundary input by the user, and the search range is adjusted, on the basis of the above-described assumptions.

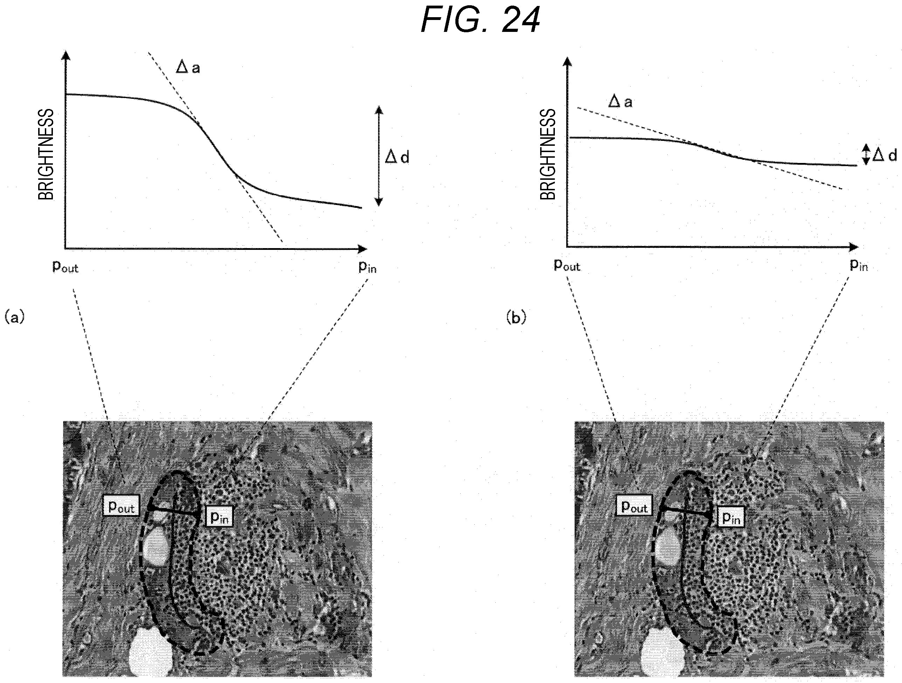

The information processing device 10 receives a specification of the search range before the input of a boundary (S31). The information processing device 10 receives an input of a boundary with a pen having a thickness corresponding to the search range (S32). The information processing device 10 calculates a change in brightness near the boundary of the received input (S73). For example, the information processing device 10 calculates a difference in brightness near the boundary or a gradient of change. The information processing device 10 determines whether or not the calculated difference in brightness near the boundary or gradient of change is equal to or greater than a predetermined threshold (S74). In a case where the calculated difference in brightness near the boundary or gradient of change is equal to or greater than the predetermined threshold ("Yes" in S74), the information processing device 10 determines that the boundary is clear and adjusts the search range to a narrow value range (S75). Note that Fig. 24(a) illustrates an example in which the boundary is determined to be clear. In the diagram, Pout indicates the outside of the boundary, and Pin indicates the inside of the boundary. In this case, the calculated difference in brightness near the boundary or gradient of change is equal to or greater than the predetermined threshold. On the other hand, in a case where the calculated difference in brightness near the boundary or gradient of change falls below the predetermined threshold ("No" in S74), the information processing device 10 determines that the boundary is unclear and adjusts the search range to a large value (S76). Note that Fig. 24(b) illustrates an example in which the boundary is determined to be unclear. In this case, the calculated difference in brightness near the boundary or gradient of change falls below the predetermined threshold.

In the example illustrated in Fig. 24, an example of processing for evaluating the unclearness of the boundary from the change in brightness around the boundary and adjusting the search range is illustrated, but the above example is not limited to the above-described example. For example, the information processing device 10 may appropriately adjust the search range by using any information that correlates with the search range intended by the user among information obtained by the image analysis. To give a specific example, the information processing device 10 may appropriately adjust the search range using color information such as luminance value, texture information such as edges and frequencies (for example, fineness of images and lines), and information regarding their spatial distribution (histogram). For example, the information processing device 10 may appropriately adjust the search range on the basis of the difference calculated by comparing the histograms. In addition, the information processing device 10 may appropriately adjust the search range by using information regarding saturation, index indicating texture, dispersion, and pixel dispersion (for example, dispersion between pixels and their surroundings). In this manner, the information processing device 10 may evaluate unclearness of the boundary on the basis of the feature amount near the boundary input by the user, and adjust the search range according to the evaluation.

In this case, the processing unit 112 executes the process of fitting in the search range adjusted according to the evaluation based on the feature amount near the boundary input by the user. For example, the processing unit 112 executes the process of fitting in the search range adjusted according to the degree of difference in brightness near the boundary input by the user.

(1.3.17. Others)

The information processing device 10 may appropriately adjust the search range on the basis of conditions such as the type of lesion and the staining method, without being limited to an image analysis result. For example, the information processing device 10 may appropriately adjust the search range on the basis of whether or not the type of lesion is a tumor, whether or not the staining method is HE staining, or the like. Furthermore, the information processing device 10 may appropriately adjust the search range on the basis of attributes and abilities (for example, skill level) of the user. For example, in a case where the skill level of the user is equal to or higher than a predetermined threshold, the information processing device 10 may presume that a more reliable boundary is input and adjust the search range to a narrow value range. On the other hand, in a case where the skill level of the user is lower than a predetermined threshold, the information processing device 10 may presume that an unreliable boundary is input and adjust the search range to a wide value range.

The example of the processing in a case where the search range is automatically changed has been described above.

(1.3.18. Plurality of processes)

In the example illustrated in Figs. 20 to 23, the case where the search range is automatically changed on the basis of each process is illustrated, but the search range may be changed on the basis of the plurality of processes described above. For example, the processing unit 112 may control the speed and the magnification at the same time to thereby automatically change the search range on the basis of the speed and the magnification. For example, the processing unit 112 may control the speed, the magnification, and the pen pressure at the same time to thereby automatically change the search range on the basis of the speed, the magnification, and the pen pressure. Note that the information processing device 10 may automatically change the search range on the basis of any combination of a plurality of processes.

(1.3.19. Fitting)

In the present embodiment, the information processing device 10 may appropriately perform the process of fitting during an input by the user. That is, the information processing device 10 may perform the process of fitting as appropriate even if the input by the user is not a closed curve. For example, the information processing device 10 may perform the process of fitting at any time on a portion of which input has been finished. Note that the information processing device 10 may receive in advance from the user a selection on whether or not to perform the process of fitting during the input.

As described above, according to the present embodiment, the user can intuitively recognize and adjust the search range, and can specify the search range as intended at the time of fitting. Further, the present embodiment can improve a possibility that a fitting result expected by the user can be obtained. Furthermore, the present embodiment can improve accuracy with respect to prediction of result after fitting by the user. In addition, the present embodiment can reduce a tendency of fitting to be different for every pathologist. Furthermore, according to the present embodiment, it is possible to reduce the difference in accuracy of annotation by the user. For example, in a case where the user manually inputs a boundary, the accuracy and range of input information may differ for every user. Specifically, in a case where a user with a high skill of inputting a boundary manually inputs a boundary, it is presumed that the accuracy of the input information is higher as compared to that of a user with a low skill. In the present embodiment, by performing the process of fitting according to the above-described embodiment, it is possible to prevent the difference in accuracy of the input information by the user from occurring. Furthermore, according to the present embodiment, the number of cells included in the boundary can be appropriately counted.

The details of the functions possessed by the information processing system 1 according to the embodiment of the present disclosure have been described above.

<2. Modification example>

Subsequently, various modification examples will be described.

First, modification example 1 will be described. In the foregoing, it is mainly assumed a case where a target region selected from the image data is used for machine learning. However, the target region selected from the image data may be used for a predetermined process other than machine learning. As an example, the target region selected from the image data may be used for analysis (scoring) of an expression level of a predetermined molecule. For example, quantification of PD-L1 molecule in tissues, which can be seen by immunostaining, is required, and a treatment selection is made on the basis of the expression level of PD-L1 molecule in tissues.

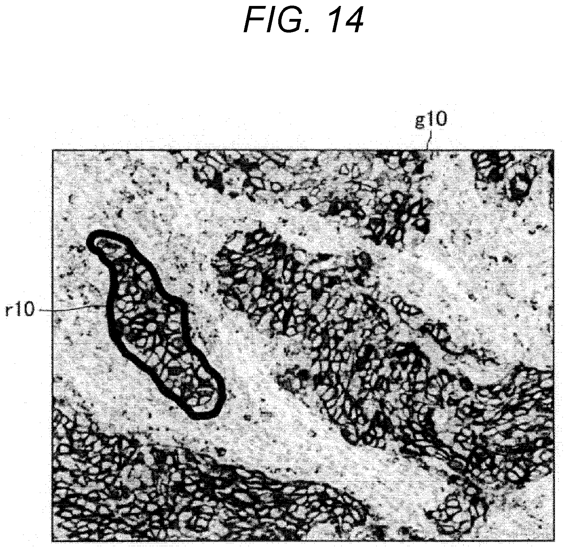

Accordingly, if a tumor region is selected as an example of the target region, the expression level of the PD-L1 molecule in the selected tumor region can be analyzed. Fig. 14 is a diagram for explaining an example in which the target region selected from the image data is used for analysis of the expression level of the PD-L1 molecule. Referring to Fig. 14, the tumor region r10 is illustrated in the image data g10. If a tumor region r10 is selected with high accuracy by fitting as described above, scoring is also performed with high accuracy. Then, if scoring is performed with high accuracy, it is expected that accuracy of treatment selection will also increase.

Note that a Tumor Proportion Score (expression level of PD-L1 molecule) can be calculated by following Equation (1).

$$\text{Tumor Proportion Score} = (\text{PD-L1 positive Tumor cells})/(\text{PD-L1 positive Tumor cells} + \text{PD-L1 negative Tumor cells})...\text{Equation (1)}$$

Next, modification example 2 will be described. In the foregoing, the fitting in a bright field image has been mainly described as a type of image data. However, the type of image data is not limited. For example, the type of image data may be a phase-contrast image obtained by a microscope, or the like. In a case where the type of image data is a phase difference image obtained by a microscope, since the image data is morphological information, it is possible to execute processing similar to the processing for the bright field image.

Further, in a case where the type of image data is a fluorescence image obtained by a microscope, it can be fitted by using autofluorescence. Furthermore, in a case where the type of image data is a fluorescence image obtained by a microscope, fitting is possible in a stained tumor membrane such as CK or HER2. In a case where the image data is a CT image or an MRI image, the image data is a radiographic image and hence is black and white, but fitting is possible. In a case where the image data is an endoscopic image, the image data is color information and morphological information, and thus fitting is possible.

The various modification examples have been described above.

<3. Hardware configuration example>

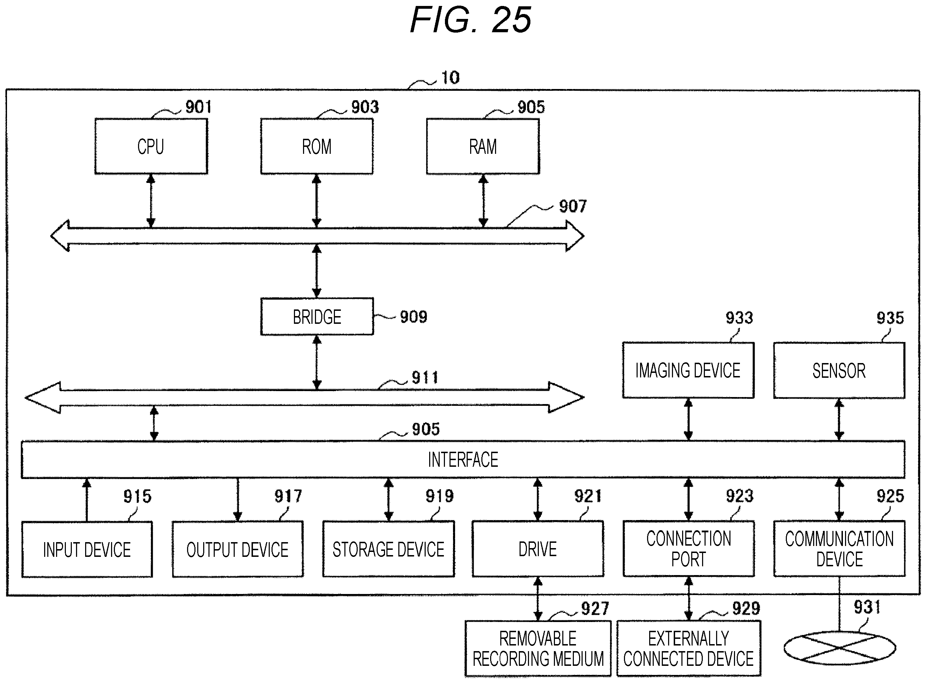

Next, a hardware configuration example of the information processing device 10 according to the embodiment of the present disclosure will be described with reference to Fig. 25. Fig. 25 is a block diagram illustrating a hardware configuration example of the information processing device 10 according to the embodiment of the present disclosure. Note that the information processing device 10 does not necessarily have all of the hardware configurations illustrated in Fig. 25, and a part of the hardware configurations illustrated in Fig. 25 does not need to exist in the information processing device 10.

As illustrated in Fig. 25, the information processing device 10 includes a central processing unit (CPU) 901, a read only memory (ROM) 903, and a random access memory (RAM) 905. Furthermore, the information processing device 10 may include a host bus 907, a bridge 909, an external bus 911, an interface 913, an input device 915, an output device 917, a storage device 919, a drive 921, a connection port 923, and a communication device 925. Moreover, the information processing device 10 may include an imaging device 933 and a sensor 935, if necessary. The information processing device 10 may have a processing circuit called a digital signal processor (DSP) or an application specific integrated circuit (ASIC) in place of or in combination with the CPU 901.

The CPU 901 functions as an arithmetic processing device and a control device, and controls overall operations or a part thereof in the information processing device 10 in accordance with various programs recorded in the ROM 903, the RAM 905, the storage device 919, or a removable recording medium 927. The ROM 903 stores programs and calculation parameters and the like used by the CPU 901. The RAM 905 temporarily stores a program used in execution by the CPU 901, parameters that change as appropriate during the execution, and the like. The CPU 901, ROM 903, and RAM 905 are connected to each other by a host bus 907 including an internal bus such as a CPU bus. Moreover, the host bus 907 is connected to the external bus 911 such as a peripheral component interconnect/interface (PCI) bus via the bridge 909.

The input device 915 is, for example, a device operated by the user, such as a button. The input device 915 may include a mouse, a keyboard, a touch panel, switches, levers, and the like. Furthermore, the input device 915 may also include a microphone that detects voice of the user. The input device 915 may be, for example, a remote control device using infrared rays or other radio waves, or an externally connected device 929 such as a mobile phone corresponding to the operation of the information processing device 10. The input device 915 includes an input control circuit that generates an input signal on the basis of information input by the user and outputs the input signal to the CPU 901. By operating this input device 915, the user inputs various data and instructs the information processing device 10 on a processing operation. Furthermore, the imaging device 933 as described later can also function as an input device by capturing an image of movement of a hand of the user, a finger of the user, or the like. At this time, a pointing position may be determined according to the movement of the hand and the direction of the finger.

The output device 917 includes a device that can visually or audibly notify the user of acquired information. The output device 917 may be, for example, a display device such as a liquid crystal display (LCD) or an organic electroluminescence (EL) display, a sound output device such as a speaker or headphones, and the like. Furthermore, the output device 917 may include a plasma display panel (PDP), a projector, a hologram, a printer device, and the like. The output device 917 outputs a result obtained by processing of the information processing device 10 as a video such as text or an image, or outputs the result as a sound such as voice or sound. Furthermore, the output device 917 may include a light or the like in order to brighten the surroundings.

The storage device 919 is a device for storing data, which is configured as an example of a storage unit of the information processing device 10. The storage device 919 includes, for example, a magnetic storage device such as a hard disk drive (HDD), a semiconductor storage device, an optical storage device, a magneto-optical storage device, or the like. This storage device 919 stores programs and various data executed by the CPU 901, various data acquired from the outside, and the like.

The drive 921 is a reader-writer for the removable recording medium 927 such as a magnetic disk, an optical disk, a magneto-optical disk, or a semiconductor memory, and is built in or externally attached to the information processing device 10. The drive 921 reads information recorded in the mounted removable recording medium 927 and outputs the information to the RAM 905. Furthermore, the drive 921 writes a record to the mounted removable recording medium 927.

The connection port 923 is a port for directly connecting a device to the information processing device 10. Examples of the connection port 923 include a universal serial bus (USB) port, an IEEE 1394 port, a small computer system interface (SCSI) port, and the like. Furthermore, the connection port 923 may be an RS-232C port, an optical audio terminal, a High-Definition Multimedia Interface (registered trademark) (HDMI) port, or the like. By connecting the externally connected device 929 to the connection port 923, various data can be exchanged between the information processing device 10 and the externally connected device 929.

The communication device 925 is, for example, a communication interface including a communication device for connecting to a network 931, or the like. The communication device 925 can be, for example, a communication card for a wired or wireless local area network (LAN), Bluetooth (registered trademark), or wireless USB (WUSB), or the like. Furthermore, the communication device 925 may be a router for optical communication, a router for asymmetric digital subscriber line (ADSL), a modem for various communication, or the like. The communication device 925 transmits and receives, for example, signals and the like to and from the Internet and other communication devices using a predetermined protocol such as TCP/IP. Furthermore, the network 931 connected to the communication device 925 is a network connected by wire or wirelessly and is, for example, the Internet, a home LAN, infrared communication, radio wave communication, satellite communication, or the like.

The imaging device 933 uses, for example, an imaging element such as a charge coupled device (CCD) or complementary metal oxide semiconductor (CMOS), and is a device that captures a real space and generates a captured image using various members such as a lens for controlling image formation of a subject image on the imaging element. The imaging device 933 may capture a still image or may capture a moving image.

The sensor 935 is, for example, various sensors such as a distance measuring sensor, an acceleration sensor, a gyro sensor, a geomagnetic sensor, a vibration sensor, an optical sensor, and a sound sensor. The sensor 935 acquires, for example, information regarding the state of the information processing device 10 itself, such as a posture of a housing of the information processing device 10, and information regarding the surrounding environment of the information processing device 10, such as brightness and noise around the information processing device 10. Furthermore, the sensor 935 may also include a global positioning system (GPS) sensor that receives a GPS signal to measure the latitude, longitude, and altitude of the device.

<4. Conclusion>

According to an embodiment of the present disclosure, there is provided an information processing device that includes a display control unit that controls display of image data in which a biological region is captured, an information acquisition unit that acquires first region information input with respect to the image data, and a processing unit that generates second region information on the basis of the image data, the first region information, and a fitting mode. According to such a configuration, it is possible to select a target region with high accuracy while reducing the effort of the user. In addition, in a case where the target region is used for machine learning, it is possible to quickly obtain a highly accurate annotation, and it is expected that performance of AI constructed by machine learning will also improve. Furthermore, if annotation data added in the past is input, the annotation data can be automatically improved.

The preferred embodiments of the present disclosure have been described above in detail with reference to the accompanying drawings, but the technical scope of the present disclosure is not limited to such examples. It is apparent that a person having ordinary knowledge in the technical field of the present disclosure can devise various change examples or modification examples within the scope of the technical idea described in the claims, and it will be naturally understood that they also belong to the technical scope of the present disclosure.

For example, in the foregoing, the information processing system having the information processing device 10, the scanner 30, the network 70, and the learning device 50 has been mainly described. However, an information processing system having a part of these may also be provided. For example, an information processing system having a part or all of the information processing device 10, the scanner 30, and the learning device 50 may be provided. At this time, the information processing system does not have to be a combination of the entire device (combination of hardware and software).

For example, an information processing system having a first device (combination of hardware and software) and software of a second device among the information processing device 10, the scanner 30, and the learning device 50 can also be provided. As an example, an information processing system having the scanner 30 (combination of hardware and software) and the software of the information processing device 10 can also be provided. As described above, according to the embodiment of the present disclosure, an information processing system including a plurality of configurations arbitrarily selected from the information processing device 10, the scanner 30, and the learning device 50 can also be provided.

Furthermore, the effects described in the present description are merely illustrative or exemplary and are not limited. That is, the technology according to the present disclosure can exhibit other effects that are apparent to those skilled in the art from the present description in addition to or instead of the effects described above.

Note that configurations as follows also belong to the technical scope of the present disclosure.

(1) An information processing device including:

a display control unit that controls display of image data in which a biological region is captured;
an information acquisition unit that acquires first region information input with respect to the image data; and
a processing unit that generates second region information on the basis of the image data, the first region information, and a fitting mode.

(2) The information processing device according to (1) above, in which
the processing unit generates a third region information on the basis of the image data, the second region information, the fitting mode, and a movable range of fitting.
(3) The information processing device according to (2) above, in which
the display control unit controls display of the third region information.
(4) The information processing device according to (3) above, in which
the display control unit switches a display target between the second region information and the third region information.
(5) The information processing device according to (3) above, in which
the display control unit causes simultaneous display of the second region information and the third region information in different display modes.
(6) The information processing device according to any one of (2) to (5) above, in which
the processing unit selects the second region information or the third region information as data used for a predetermined process.
(7) The information processing device according to (6) above, in which
the processing unit selects the second region information or the third region information as data used for the predetermined process on the basis of a selection operation.
(8) The information processing device according to (6) above, in which

the processing unit changes a magnification of the image data after generating the second region information, and generates the third region information on the basis of the image data after changing the magnification.

(9) The information processing device according to (8) above, in which
the processing unit changes the magnification of the image data so that the magnification becomes high after generating the second region information, and generates the third region information on the basis of the image data after changing the magnification.

(10) The information processing device according to (9) above, in which
the processing unit selects the third region information as data used for the predetermined process.

(11) The information processing device according to any one of (2) to (10) above, in which
the processing unit determines a plurality of control points on the basis of the second region information, moves a part or all of the plurality of control points on the basis of a moving operation, and generates the third region information at least on the basis of the moved control points.

(12) The information processing device according to (11) above, in which
in a case where a part of the plurality of control points is moved on the basis of the moving operation, the processing unit generates the third region information on the basis of the moved control points.

(13) The information processing device according to any one of (1) to (12) above, in which
in a case where the display control unit detects a section in which a reliability of the second region information is lower than a predetermined reliability on the basis of the second region information, the display control unit controls display of predetermined information according to the section.

(14) The information processing device according to any one of (1) to (13) above, in which
the information acquisition unit obtains the first region information on the basis of a passing region or a peripheral region having a shape an instruction of which is given with respect to the image data.

(15) The information processing device according to (14) above, in which
the information acquisition unit obtains the first region information on the basis of a segmentation algorithm by graph cut or machine learning applied to the passing region or the peripheral region of the shape.

(16) The information processing device according to (14) above, in which
the information acquisition unit obtains the first region information on the basis of feature data extracted from the passing region or the peripheral region of the shape.

(17) The information processing device according to any one of (1) to (16) above, in which
the fitting mode is a fitting mode for a boundary between a foreground and a background, a fitting mode for a cell membrane, or a fitting mode for a cell nucleus.

(18) The information processing device according to any one of (1) to (17) above, in which
the processing unit generates the second region information of the image data within a range set on the basis of the first region information and a predetermined condition.

(19) The information processing device according to (18) above, in which
the processing unit generates the second region information within a range set on the basis of an input operation of the first region information of a user.

(20) The information processing device according to (19) above, in which
the processing unit generates the second region information within a range set on the basis of an input speed of the first region information of the user.

(21) The information processing device according to (19) or (20) above, in which
the processing unit generates the second region information within a range set on the basis of a magnification of the image data.

(22) The information processing device according to any one of (19) to (21) above, in which
the processing unit generates the second region information within a range set on the basis of a feature amount near the first region information.

(23) The information processing device according to (22) above, in which
the processing unit generates the second region information within a range set on the basis of brightness near the first region information.

(24) The information processing device according to any one of (18) to (23) above, in which
the display control unit controls display of the range of the image data.

(25) The information processing device according to (24) above, in which
the display control unit controls the range to be displayed with at least two or more transmittances and colors.

(26) An information processing method including:

controlling, by a processor, display of image data in which a biological region is captured;
acquiring, by the processor, first region information input with respect to the image data; and
generating, by the processor, second region information on the basis of the image data, the first region information, and a fitting mode.

(27) An information processing system having a reading device that generates, by reading a biological region, scan data including image data in which the biological region is captured,
the information processing system including an information processing device that includes:

a display control unit that controls display of the image data;
an information acquisition unit that acquires first region information input with respect to the image data; and
a processing unit that generates second region information on the basis of the image data, the first region information, and the fitting mode.

(28) An information processing system including a medical image imaging device and software used for processing image data corresponding to an object imaged by the medical image imaging device,
in which the software causes an information processing device to execute a process including:

acquiring first region information input with respect to first image data corresponding to a first biological tissue; and
generating second region information on the basis of the first image data, the first region information, and a fitting mode.

REFERENCE SIGNS LIST

| | |
|---|---|
| 1 | Information processing system |
| 10 | Information processing device |
| 30 | Scanner |
| 50 | Learning device |
| 70 | Network |
| 111 | Information acquisition unit |
| 112 | Processing unit |
| 113 | Display control unit |
| 120 | Image data reception unit |
| 130 | Storage unit |
| 140 | Operation unit |
| 150 | Transmission unit |

**Claims**

1. An information processing device comprising:

   a display control unit that controls display of image data in which a biological region is captured;
   an information acquisition unit that acquires first region information input with respect to the image data; and
   a processing unit that generates second region information on a basis of the image data, the first region information, and a fitting mode.

2. The information processing device according to claim 1, wherein
   the processing unit generates a third region information on a basis of the image data, the second region information, the fitting mode, and a movable range of fitting.

3. The information processing device according to claim 2, wherein
   the display control unit controls display of the third region information.

4. The information processing device according to claim 3, wherein
   the display control unit switches a display target between the second region information and the third region information.

5. The information processing device according to claim 3, wherein

the display control unit causes simultaneous display of the second region information and the third region information in different display modes.

6. The information processing device according to claim 2, wherein
the processing unit selects the second region information or the third region information as data used for a predetermined process.

7. The information processing device according to claim 6, wherein
the processing unit selects the second region information or the third region information as data used for the predetermined process on a basis of a selection operation.

8. The information processing device according to claim 6, wherein
the processing unit changes a magnification of the image data after generating the second region information, and generates the third region information on a basis of the image data after changing the magnification.

9. The information processing device according to claim 8, wherein
the processing unit changes the magnification of the image data so that the magnification becomes high after generating the second region information, and generates the third region information on a basis of the image data after changing the magnification.

10. The information processing device according to claim 9, wherein
the processing unit selects the third region information as data used for the predetermined process.

11. The information processing device according to claim 2, wherein
the processing unit determines a plurality of control points on a basis of the second region information, moves a part or all of the plurality of control points on a basis of a moving operation, and generates the third region information at least on a basis of the moved control points.

12. The information processing device according to claim 11, wherein
in a case where a part of the plurality of control points is moved on a basis of the moving operation, the processing unit generates the third region information on a basis of the moved control points.

13. The information processing device according to claim 1, wherein
in a case where the display control unit detects a section in which a reliability of the second region information is lower than a predetermined reliability on a basis of the second region information, the display control unit controls display of predetermined information according to the section.

14. The information processing device according to claim 1, wherein
the information acquisition unit obtains the first region information on a basis of a passing region or a peripheral region having a shape an instruction of which is given with respect to the image data.

15. The information processing device according to claim 14, wherein
the information acquisition unit obtains the first region information on a basis of a segmentation algorithm by graph cut or machine learning applied to the passing region or the peripheral region of the shape.

16. The information processing device according to claim 14, wherein
the information acquisition unit obtains the first region information on a basis of feature data extracted from the passing region or the peripheral region of the shape.

17. The information processing device according to claim 1, wherein
the fitting mode is a fitting mode for a boundary between a foreground and a background, a fitting mode for a cell membrane, or a fitting mode for a cell nucleus.

18. The information processing device according to claim 1, wherein
the processing unit generates the second region information of the image data within a range set on a basis of the first region information and a predetermined condition.

19. The information processing device according to claim 18, wherein

the processing unit generates the second region information within a range set on a basis of an input operation of the first region information of a user.

20. The information processing device according to claim 19, wherein
the processing unit generates the second region information within a range set on a basis of an input speed of the first region information of the user.

21. The information processing device according to claim 19, wherein
the processing unit generates the second region information within a range set on a basis of a magnification of the image data.

22. The information processing device according to claim 19, wherein
the processing unit generates the second region information within a range set on a basis of a feature amount near the first region information.

23. The information processing device according to claim 19, wherein
the processing unit generates the second region information within a range set on a basis of brightness near the first region information.

24. The information processing device according to claim 18, wherein
the display control unit controls display of the range of the image data.

25. The information processing device according to claim 18, wherein
the display control unit controls the range to be displayed with at least two or more transmittances and colors.

26. An information processing method comprising:

controlling, by a processor, display of image data in which a biological region is captured;
acquiring, by the processor, first region information input with respect to the image data; and
generating, by the processor, second region information on a basis of the image data, the first region information, and a fitting mode.

27. An information processing system having a reading device that generates, by reading a biological region, scan data including image data in which the biological region is captured,
the information processing system comprising an information processing device that includes:

a display control unit that controls display of the image data;
an information acquisition unit that acquires first region information input with respect to the image data; and
a processing unit that generates second region information on a basis of the image data, the first region information, and the fitting mode.

28. An information processing system comprising a medical image imaging device and software used for processing image data corresponding to an object imaged by the medical image imaging device,
wherein the software causes an information processing device to execute a process including:

acquiring first region information input with respect to first image data corresponding to a first biological tissue; and
generating second region information on a basis of the first image data, the first region information, and a fitting mode.

# FIG. 1

# FIG. 2

INFORMATION PROCESSING DEVICE 10

SCANNER 30 → IMAGE DATA RECEPTION UNIT 120

STORAGE UNIT 130

OPERATION UNIT 140

PROCESSING UNIT 112

INFORMATION ACQUISITION UNIT 111

DISPLAY CONTROL UNIT 113 → DISPLAY DEVICE

TRANSMISSION UNIT 150 → LEARNING DEVICE 50

USER

## FIG. 3

## FIG. 4

# FIG. 5

EP 3 933 383 A1

# FIG. 6

SURROUND TUMOR REGION WITH CURVE —S11

GRAPH CUT ENERGY CALCULATION —S12

CORRECT CURVE —S13

S14

FITTING OK?  No

Yes  S16

S15

MANUAL ADJUSTMENT

CREATE ANNOTATION DATA

MACHINE LEARNING —S17

# FIG. 7

SURROUND TUMOR REGION WITH CURVE ~S11

GRAPH CUT ENERGY CALCULATION ~S12

CORRECT CURVE ~S13

S24
SPECIFIED MAGNIFICATION?

No → MAGNIFICATION CHANGE (TO HIGHER MAGNIFICATION) S25

Yes S16
CREATE ANNOTATION DATA

MACHINE LEARNING ~S17

## FIG. 8

R10

## FIG. 9

CP

R10

# FIG. 10

R10

CP

# FIG. 11

Mipmap

R10 G10-1

×10

R10 G10-2

T21    T2

M10

×20

M20    G20-1

R20

## FIG. 12

## FIG. 13

FIG. 14

## FIG. 15

(a)　　　　　　　　(b)

## FIG. 16

# FIG. 17

ADVANCING DIRECTION
OF BOUNDARY

(a)

ADVANCING DIRECTION
OF BOUNDARY

(b)

# FIG. 18

P21

P22

(a)

(b)

# FIG. 19

SPECIFY SEARCH RANGE — S31

INPUT BOUNDARY — S32

INPUT COMPLETED? — S33 — No

Yes

FITTING
(OPTIMIZATION OF BOUNDARY) — S34

CHECK RESULT — S35

COMPLETED? — S36 — No

Yes

# FIG. 20

```
        ◯
        │
        ▼
┌─────────────────────────┐
│   SPECIFY SEARCH RANGE   │〜S31
└─────────────────────────┘
        │
        ▼
┌─────────────────────────┐
│     INPUT BOUNDARY       │〜S32
└─────────────────────────┘
        │
        ▼
┌─────────────────────────┐
│   CALCULATE INPUT SPEED  │〜S43
└─────────────────────────┘
        │
        ▼
       ╱S44╲
      ╱       ╲
     ╱ IS SPEED ╲            No
    ╱  EQUAL TO   ╲───────────────────┐
    ╲  OR MORE THAN╱                   │
     ╲ THRESHOLD? ╱                    │
      ╲         ╱                      │
        │ Yes                          │
        ▼ S45                          ▼ S46
┌─────────────────────────┐   ┌─────────────────────────┐
│ SEARCH RANGE ADJUSTMENT 1│   │ SEARCH RANGE ADJUSTMENT 2│
└─────────────────────────┘   └─────────────────────────┘
        │                              │
        ◀──────────────────────────────┘
        ▼
        ◯
```

# FIG. 21

```
         ( )
          │
          ▼
┌──────────────────────┐
│ SPECIFY SEARCH RANGE │──S31
└──────────────────────┘
          │
          ▼
┌──────────────────────┐
│   INPUT BOUNDARY     │──S32
└──────────────────────┘
          │
          ▼
┌──────────────────────┐
│ CALCULATE PEN PRESSURE│──S53
└──────────────────────┘
          │
          ▼
       S54
    ╱IS PEN PRESSURE╲        No
   ╱ EQUAL TO OR MORE ╲──────────────┐
   ╲   THAN THRESHOLD?╱               │
    ╲_____╱                │
          │ Yes                       │
          ▼ S55                       ▼ S56
┌──────────────────────┐   ┌──────────────────────┐
│ SEARCH RANGE         │   │ SEARCH RANGE         │
│ ADJUSTMENT 1         │   │ ADJUSTMENT 2         │
└──────────────────────┘   └──────────────────────┘
          │◄──────────────────────────┘
          ▼
         ( )
```

# FIG. 22

SPECIFY SEARCH RANGE ~S31

INPUT BOUNDARY ~S32

MAGNIFICATION ENLARGED? ⌐S63

No

Yes ⌐S64

SEARCH RANGE ADJUSTMENT 1

⌐S65

SEARCH RANGE ADJUSTMENT 2

# FIG. 23

SPECIFY SEARCH RANGE — S31

INPUT BOUNDARY — S32

CALCULATE CHANGE IN BRIGHTNESS — S73

IS DIFFERENCE OR INCLINATION EQUAL TO OR MORE THAN THRESHOLD? — S74

No

Yes

SEARCH RANGE ADJUSTMENT 1 — S75

SEARCH RANGE ADJUSTMENT 2 — S76

# FIG. 24

(a)

(b)

# FIG. 25

CPU 901
ROM 903
RAM 905

907

BRIDGE 909

IMAGING DEVICE 933
SENSOR 935

911

905
INTERFACE

INPUT DEVICE 915
OUTPUT DEVICE 917
STORAGE DEVICE 919
DRIVE 921
CONNECTION PORT 923
COMMUNICATION DEVICE 925

REMOVABLE RECORDING MEDIUM 927
EXTERNALLY CONNECTED DEVICE 929

931

10

EP 3 933 383 A1

## INTERNATIONAL SEARCH REPORT

| International application No. |
|---|
| PCT/JP2019/050836 |

A. CLASSIFICATION OF SUBJECT MATTER
Int.Cl. G01N21/17(2006.01)i, G06T7/00(2017.01)i, G06T7/149(2017.01)i, G06F3/0484(2013.01)i
FI: G06T7/149, G06T7/00630, G06F3/0484120, G06T7/00350B, G01N21/17A, G06T7/00U

According to International Patent Classification (IPC) or to both national classification and IPC

B. FIELDS SEARCHED

Minimum documentation searched (classification system followed by classification symbols)
Int.Cl. G01N21/17, G06T7/00, G06T7/149, G06F3/0484

Documentation searched other than minimum documentation to the extent that such documents are included in the fields searched
Published examined utility model applications of Japan     1922-1996
Published unexamined utility model applications of Japan   1971-2020
Registered utility model specifications of Japan           1996-2020
Published registered utility model applications of Japan   1994-2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2006-514356 A (KINETIC LIMITED) 27.04.2006 (2006-04-27), paragraphs [0001], [0016], [0018]-[0039], [0045], fig. 3 | 1, 26-28<br>2-25 |
| Y | JP 2018-524732 A (SONY CORPORATION) 30.08.2018 (2018-08-30), paragraphs [0024]-[0027], [0029] | 2-25 |
| Y | JP 2014-71207 A (CANON INC.) 21.04.2014 (2014-04-21), paragraph [0115] | 3-5 |
| Y | JP 2017-73119 A (SONY CORPORATION) 13.04.2017 (2017-04-13), paragraphs [0060]-[0076] | 11-12 |

☒  Further documents are listed in the continuation of Box C.     ☒  See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 18.03.2020 | 31.03.2020 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**EP 3 933 383 A1**

<table>
<tr><td colspan="2" align="center"><b>INTERNATIONAL SEARCH REPORT</b></td><td>International application No.<br>PCT/JP2019/050836</td></tr>
</table>

C (Continuation).   DOCUMENTS CONSIDERED TO BE RELEVANT

| Category* | Citation of document, with indication, where appropriate, of the relevant passages | Relevant to claim No. |
|---|---|---|
| Y | 江尻 正員，ディジタル画像処理 [改訂新版] 第一版 Digital Image Processing, 公益財団法人画像情報教育振興協会 （CG-ARTS 協会） 松阪 喜幸, 2015.03.09, pp. 204-216,「10-2 領域分割処理」, (EJIRI, Masakazu, The Computer Graphic Arts Society (CG-ARTS), MATSUSAKA, Yoshiyuki), non-official translation ([revised new edition] first edition, "10-2 Area division processing") | 14-16 |
| Y | 山下 隆義 YAMASHITA, Takayoshi, イラストで学ぶ ディープラーニング 改訂第 2 版 An illustrated guide to deep learning, 株式会社講談社 鈴木 哲, 2018.11.19, pp. 104-111, 「5.3 セグメンテーション」, (KODANSHA LTD., SUZUKI, Satoshi), non-official translation (revised second edition, "5.3 Segmentation") | 14-16 |

Form PCT/ISA/210 (second sheet) (January 2015)

INTERNATIONAL SEARCH REPORT

Information on patent family members

International application No.

PCT/JP2019/050836

| JP 2006-514356 A | 27.04.2006 | US 2006/0013455 A1<br>paragraphs [0001], [0020],<br>[0022]-[0037],<br>[0046], fig. 3 |
| JP 2018-524732 A | 30.08.2018 | US 9443316 B1<br>column 4, column 39 to<br>column 6, line 7,<br>column 6, lines 14-20 |
| JP 2014-71207 A | 21.04.2014 | US 2015/0153559 A1<br>paragraph [0149] |
| JP 2017-73119 A | 13.04.2017 | US 2018/0268557 A1<br>paragraphs [0104]-[0120] |

Form PCT/ISA/210 (patent family annex) (January 2015)

# EP 3 933 383 A1

**REFERENCES CITED IN THE DESCRIPTION**

**Non-patent literature cited in the description**

- **JESSICA L. BAUMANN et al.** Annotation of Whole Slide Images Using Touchscreen Technology. *Pathology Visions,* 2018